# EUROPEAN PATENT APPLICATION

(11) **EP 4 761 339 A1**
(43) Date of publication of application: **17.06.2026**
(21) Application number: 24861765.6
(22) Date of filing: 09.08.2024
(51) Int. Cl.: H04W 24/08

(54) **CELL FAULT PROCESSING METHOD AND COMMUNICATION APPARATUS**

(30) Priority: 08.09.2023 CN 202311168914
(71) Applicant: Honor Device Co., Ltd., Shenzhen, Guangdong 518040 (CN)
(72) Inventor: LI, Haibo, Shenzhen, Guangdong 518040 (CN)
(74) Representative: Gill Jennings & Every LLP
(86) International application number: PCT/CN2024/110893
(87) International publication number: WO 2025/050921

(57) **Abstract**

This application discloses a cell fault processing method and a communication apparatus. The method includes: acquiring first fault information, the first fault information indicating that a first cell has a stalling fault for a first service; verifying, according to the first fault information, whether the first cell has the stalling fault for the first service in the case of camping on the first cell and being in a connected state; and sending a first measurement report to an access network device corresponding to the first cell after it is verified that the first cell has the stalling fault for the first service, a first signal measurement result of the first cell carried in the first measurement report being less than a current actual signal measurement result of the first cell. Based on the method, it is conducive to improving communication quality of a terminal.

## Description

This application claims priority to Chinese Patent Application No. 202311168914.4, filed with the China National Intellectual Property Administration on September 8, 2023 and entitled "CELL FAULT PROCESSING METHOD AND COMMUNICATION APPARATUS", which is incorporated herein by reference in its entirety.

### TECHNICAL FIELD

This application relates to the field of communication technologies, and in particular, to a cell fault processing method and a communication apparatus.

### BACKGROUND

Due to reasons such as software/hardware faults in a network-side device, network parameter misconfiguration, or inadequate network optimization, numerous cell (cell)-level faults or tracking area code (tracking area code, TAC)-level faults exist in an existing network. An access network device may include one or more cells. A TAC area is an area set for paging in a mobile communication system. One TAC area may include one or more cells. A cloud server may calculate fault map information based on fault information reported by a large quantity of terminals. The cloud server may deliver the fault map information to the terminals. Therefore, the terminals may select a most appropriate cell to camp on based on the fault map information. It is found in practice that the fault map information received by the terminals may be inaccurate. As a result, the terminals cannot camp on an optimal cell, resulting in poor communication quality of the terminals.

### SUMMARY

This application provides a cell fault processing method and a communication apparatus, which helps to improve the communication quality of the terminals.

According to a first aspect, this application provides a cell fault processing method, the method including:

acquiring first fault information, the first fault information indicating that a first cell has a stalling fault for a first service, and the first service being a data service or a call service; verifying, according to the first fault information, whether the first cell has the stalling fault for the first service in the case of camping on the first cell and being in a connected state; and sending a first measurement report to an access network device corresponding to the first cell after it is verified that the first cell has the stalling fault for the first service, the first measurement report carrying a first signal measurement result of the first cell, and the first signal measurement result being less than a current actual signal measurement result of the first cell.

Based on the method described in the first aspect, the terminal may camp on the first cell and, when in the connected state, verify, according to the first fault information, whether the first cell has the stalling fault for the first service, to ensure authenticity of the fault in the first cell. Moreover, when it is verified that the first cell indeed has the stalling fault for the first service, the signal measurement result of the first cell is reduced, and the reduced signal measurement result of the first cell is reported (that is, the first signal measurement result is reported), so that a network side considers that the first cell has worse signal quality, thereby instructing the terminal to perform handover to a cell with a better signal other than the first cell, which helps the terminal escape from the first cell that indeed has a fault, to improve communication quality of the terminal.

In a possible embodiment, after the first measurement report is sent, if a first message sent by the access network device corresponding to the first cell is received within a first time period, the first message carrying information of a target cell, handover from the first cell to the target cell for camping is performed based on the first message. The first message indicates the handover from the first cell to the target cell.

Based on the possible embodiment, it is beneficial for the terminal to escape from the first cell that indeed has a fault, to improve the communication quality of the terminal.

In a possible embodiment, the verifying, according to the first fault information, whether the first cell has the stalling fault for the first service includes: verifying, multiple times within a second time period according to the first fault information, whether the first cell has the stalling fault for the first service; and
the sending a first measurement report to an access network device corresponding to the first cell after it is verified that the first cell has the stalling fault for the first service includes: sending the first measurement report to the access network device corresponding to the first cell after it is verified for a preset consecutive verification count that the first cell has the stalling fault for the first service.

Based on the possible embodiment, the terminal can perform fault verification on the first cell multiple times, thereby helping to improve accuracy of the fault verification.

In a possible embodiment, the verifying, according to the first fault information, whether the first cell has the stalling fault for the first service includes: verifying, multiple times within a second time period according to the first fault information, whether the first cell has the stalling fault for the first service; and
the sending a first measurement report to an access network device corresponding to the first cell after it is verified that the first cell has the stalling fault for the first service includes: sending the first measurement report to the access network device corresponding to the first cell after it is detected that a first ratio is greater than or equal to a ratio threshold, the first ratio being a ratio of a count of verifications for the first cell having the stalling fault for the first service within the second time period to a total verification count within the second time period.

Based on the possible embodiment, the terminal can perform fault verification on the first cell multiple times, thereby helping to improve accuracy of the fault verification.

In a possible embodiment, after the first measurement report is sent, when the first message sent by the access network device corresponding to the first cell is not received within the first time period, the method further includes: sending a second measurement report to the access network device corresponding to the first cell when the first signal measurement result of the first cell is greater than a first threshold, the second measurement report carrying a second signal measurement result of the first cell, the second signal measurement result being less than the current actual signal measurement result of the first cell, and the second signal measurement result being less than the first signal measurement result; and after the second measurement report is sent, if the first message sent by the access network device corresponding to the first cell is received within a third time period, performing, based on the first message, handover from the first cell to the target cell for camping.

Based on the possible embodiment, the terminal can reduce the signal measurement result of the first cell multiple times, to prevent disregard of a measurement report due to the first cell's consideration of erroneous measurement reporting caused by an excessive change in the signal measurement result of the first cell.

In a possible embodiment, after the first measurement report is sent, when the first message sent by the access network device corresponding to the first cell is not received within the first time period, the method further includes: when the first signal measurement result of the first cell is less than or equal to the first threshold and the first cell has a neighbour cell, triggering a radio link failure RLF procedure, and selecting the neighbour cell for camping; and when the neighbour cell is selected for camping, a signal measurement result of the neighbour cell being less than the current actual signal measurement result of the first cell.

Based on the possible embodiment, when the reduced first signal measurement result of the first cell is less than or equal to the first threshold, if the first message has not been received yet, the terminal can autonomously trigger the RLF procedure, to select the neighbour cell for camping, enabling timely escape.

In a possible embodiment, after the second measurement report is sent, when the first message sent by the access network device corresponding to the first cell is not received within the third time period, the method further includes: when the second signal measurement result of the first cell is less than or equal to the first threshold and the first cell has a neighbour cell, triggering a radio link failure RLF procedure, and selecting the neighbour cell for camping; and when the neighbour cell is selected for camping, a signal measurement result of the neighbour cell being less than the current actual signal measurement result of the first cell.

Based on the possible embodiment, when the reduced second signal measurement result of the first cell is less than or equal to the first threshold, if the first message has not been received yet, the terminal can autonomously trigger the RLF procedure, to select the neighbour cell for camping, enabling timely escape.

In a possible embodiment, after the first measurement report is sent, when the first message sent by the access network device corresponding to the first cell is not received within the first time period, the method further includes: verifying, according to the first fault information, whether the first cell has the stalling fault for the first service when the first signal measurement result of the first cell is greater than the first threshold; sending a second measurement report to the access network device corresponding to the first cell after it is verified that the first cell has the stalling fault for the first service, the second measurement report carrying a second signal measurement result of the first cell, the second signal measurement result being less than the current actual signal measurement result of the first cell, and the second signal measurement result being less than the first signal measurement result; and after the second measurement report is sent, if the first message sent by the access network device corresponding to the first cell is received within a third time period, performing, based on a second message, handover from the first cell to the target cell for camping.

Based on the possible embodiment, the terminal can perform fault verification on the first cell multiple times, thereby helping to improve accuracy of the fault verification. Moreover, the terminal can reduce the signal measurement result of the first cell multiple times, to prevent disregard of a measurement report due to the first cell's consideration of erroneous measurement reporting caused by an excessive change in the signal measurement result of the first cell.

In a possible embodiment, after the first measurement report is sent, when the first message sent by the access network device corresponding to the first cell is not received within the first time period, the method further includes: when the first signal measurement result of the first cell is less than or equal to the first threshold and the first cell has a neighbour cell, triggering a radio link failure RLF procedure, and selecting the neighbour cell for camping; and when the neighbour cell is selected for camping, a signal measurement result of the neighbour cell being less than the current actual signal measurement result of the first cell.

Based on the possible embodiment, when the reduced first signal measurement result of the first cell is less than or equal to the first threshold, if the first message has not been received yet, the terminal can autonomously trigger the RLF procedure, to select the neighbour cell for camping, enabling timely escape.

In a possible embodiment, after the second measurement report is sent, when the first message sent by the access network device corresponding to the first cell is not received within the third time period, the method further includes: when the second signal measurement result of the first cell is less than or equal to the first threshold and the first cell has a neighbour cell, triggering a radio link failure RLF procedure, and selecting the neighbour cell for camping; and when the neighbour cell is selected for camping, a signal measurement result of the neighbour cell being less than the current actual signal measurement result of the first cell.

Based on the possible embodiment, when the reduced second signal measurement result of the first cell is less than or equal to the first threshold, if the first message has not been received yet, the terminal can autonomously trigger the RLF procedure, to select the neighbour cell for camping, enabling timely escape.

In a possible embodiment, the first fault information is disregarded or the signal measurement result of the first cell is not reported if it is verified that the first cell does not have the stalling fault for the first service (specifically, when the measurement report is sent, the first signal measurement result of the first cell carried in the measurement report may be the current actual signal measurement result of the first cell). Optionally, "disregarding the first fault information" may mean disregarding that the first cell has the stalling fault for the first service indicated by the first fault information.

Based on the possible embodiment, if it is determined through verification that the first cell does not have the stalling fault for the first service, the terminal does not perform an escape operation, to prevent degradation of the communication quality of the terminal due to camping on a cell with worse signal quality than the current camping cell.

In a possible embodiment, when the first message is received, the signal measurement result of the first cell is not reported when the current actual signal measurement result of the first cell meets a measurement reporting condition.

Based on the possible embodiment, in this way, it is conducive to preventing an influence on the communication quality of the terminal due to handover of the terminal to the first cell that has the stalling fault for the first service for camping.

In a possible embodiment, the signal measurement result of the first cell is not reported when the first signal measurement result of the first cell is less than or equal to the first threshold and the current actual signal measurement result of the first cell meets the measurement reporting condition.

Based on the possible embodiment, in this way, it is conducive to preventing an influence on the communication quality of the terminal due to handover of the terminal to the first cell that has the stalling fault for the first service for camping.

In a possible embodiment, a specific implementation in which the signal measurement result of the first cell is not reported when the current actual signal measurement result of the first cell meets the measurement reporting condition is: not reporting the signal measurement result of the first cell when the current actual signal measurement result of the first cell meets the measurement reporting condition within a fourth time period; and the method further includes: reporting the signal measurement result of the first cell when the current actual signal measurement result of the first cell meets the measurement reporting condition if the fourth time period expires.

Based on the possible embodiment, it is beneficial for the terminal to subsequently re-camp on the first cell after fault recovery.

In a possible embodiment, the method further includes: acquiring second fault information, the second fault information being used for indicating a faulty cell, a fault type of the cell, and a fault service of the cell; and reporting the signal measurement result of the first cell when the current actual signal measurement result of the first cell meets the measurement reporting condition if the second fault information does not indicate that the first cell has the stalling fault for the first service.

Based on the possible embodiment, it is beneficial for the terminal to subsequently re-camp on the first cell after fault recovery.

In a possible embodiment, the first cell is not selected/reselected for camping when the first message is received and the current actual signal measurement result of the first cell meets a cell selection/reselection condition for selecting/reselecting the first cell for camping.

Based on the possible embodiment, in this way, it is conducive to preventing an influence on the communication quality of the terminal due to the terminal's selection/reselection of the first cell that has a stalling fault for the first service for camping.

In a possible embodiment, the first cell is not selected/reselected for camping when the first signal measurement result of the first cell is less than or equal to the first threshold and the current actual signal measurement result of the first cell meets a cell selection/reselection condition for selecting/reselecting the first cell for camping.

Based on the possible embodiment, in this way, it is conducive to preventing an influence on the communication quality of the terminal due to selection/reselection of camping of the terminal on the first cell that has a stalling fault for the first service for camping.

In a possible embodiment, a specific implementation in which the first cell is not selected/reselected for camping when the current actual signal measurement result of the first cell meets a cell selection/reselection condition for selecting/reselecting the first cell for camping is: not selecting/reselecting the first cell for camping when the current actual signal measurement result of the first cell meets the cell selection/reselection condition for selecting/reselecting the first cell for camping within a fourth time period; and the method further includes: selecting/reselecting the first cell for camping when the current actual signal measurement result of the first cell meets the cell selection/reselection condition for selecting/reselecting the first cell for camping if the fourth time period expires.

Based on the possible embodiment, it is beneficial for the terminal to subsequently re-camp on the first cell after fault recovery.

In a possible embodiment, the method further includes: acquiring second fault information, the second fault information being used for indicating a faulty cell, a fault type of the cell, and a fault service of the cell; and selecting/reselecting the first cell for camping when the current actual signal measurement result of the first cell meets the cell selection/reselection condition for selecting/reselecting the first cell for camping if the second fault information does not indicate that the first cell has the stalling fault for the first service.

Based on the possible embodiment, it is beneficial for the terminal to subsequently re-camp on the first cell after fault recovery.

In a possible embodiment, the first cell is marked as having the stalling fault for the first service after it is verified that the first cell has the stalling fault for the first service; and the signal measurement result of the first cell is reduced to a value less than or equal to a second threshold when the signal measurement result of the first cell marked as having the stalling fault for the first service is greater than the second threshold when the first message is received.

Based on the possible embodiment, in this way, it is conducive to preventing an influence on the communication quality of the terminal due to handover of the terminal to the first cell that has the stalling fault for the first service for camping.

In a possible embodiment, the first cell is marked as having the stalling fault for the first service after it is verified that the first cell has the stalling fault for the first service; and the signal measurement result of the first cell is reduced to a value less than or equal to a second threshold when the first signal measurement result of the first cell is less than or equal to the first threshold and when the signal measurement result of the first cell marked as having the stalling fault for the first service is greater than the second threshold.

Based on the possible embodiment, in this way, it is conducive to preventing an influence on the communication quality of the terminal due to handover of the terminal to the first cell that has the stalling fault for the first service for camping.

In a possible embodiment, a specific implementation in which the first cell is marked as having the stalling fault for the first service is: marking the first cell as having the stalling fault for the first service, and starting a first timer; and the method further includes: removing the marking indicating that the first cell has the stalling fault for the first service if the first timer times out.

Based on the possible embodiment, it is beneficial for the terminal to subsequently re-camp on the first cell after fault recovery.

In a possible embodiment, second fault information is acquired, the second fault information being used for indicating a faulty cell, a fault type of the cell, and a fault service of the cell; and removing the marking indicating that the first cell has the stalling fault for the first service after the second fault information does not indicate that the first cell has the stalling fault for the first service.

Based on the possible embodiment, it is beneficial for the terminal to subsequently re-camp on the first cell after fault recovery.

In a possible embodiment, a duration of the second time period is related to the first service.

Based on the possible embodiment, the duration of the second time period is flexible, and by making the duration of the second time period related to a fault service, different service requirements can be met more flexibly.

In a possible embodiment, when the first service is the call service, the duration of the second time period is a first duration; and when the first service is a service other than the call service, the duration of the second time period is a second duration; the first duration being less than the second duration.

Based on the possible embodiment, by making the second time period corresponding to the call service shorter, it is conducive to reducing a call stalling duration, thereby improving call experience of the user.

In a possible embodiment, a reduction amount of the signal measurement result of the first cell is related to the first service.

In the possible embodiment, the signal measurement result of the first cell is reduced based on a fault service of a cell, so that different service requirements can be met more flexibly.

In a possible embodiment, a reduction amount of the signal measurement result of the first cell is associated with a maximum reduction count corresponding to the first cell, and the maximum reduction count corresponding to the first cell is related to the first service.

In a possible embodiment, Δ denotes a reduction amount each time the signal measurement result of the first cell is reduced, Δ= (*R*1 - *Rmax*)/*α*, *R*1 denotes an actual signal measurement result of the first cell when the signal measurement result of the first cell is reduced for the first time, *Rmax* denotes a first threshold, and *α* denotes a maximum reduction count corresponding to the first cell.

In a possible embodiment, Δ _{*} i denotes a reduction amount when the signal measurement result of the first cell is reduced for the i^{th} time, i being an integer greater than 0, Δ= (*R*1 - *Rmax*)/*α*, *R*1 denotes an actual signal measurement result of the first cell when the signal measurement result of the first cell is reduced for the first time, *Rmax* denotes a first threshold, and *α* denotes a maximum reduction count corresponding to the first cell.

In a possible embodiment, the method further includes: acquiring third fault information when the second cell is camped on, the third fault information indicating that a third cell has a NAS rejection fault for the call service; not reporting a signal measurement result of the third cell when the second cell is camped on, a current service is the call service, and a current actual signal measurement result of the third cell meets the measurement reporting condition; and reporting the signal measurement result of the third cell when the second cell is camped on, the current service is not the call service, and a current actual signal measurement result of the second cell meets the measurement reporting condition. It may be understood that the third cell is a neighbour cell of the second cell.

Based on the possible embodiment, it is conducive to preventing an influence on user experience due to interruption of a call caused by handover of the terminal to the third cell that has a NAS rejection fault for the call service for camping during execution of the call service. It may be understood that, if the third fault information indicates that the third cell has a NAS rejection fault for the call service, the terminal may not verify, according to the third fault information, whether the third cell has the NAS rejection fault for the call service (specifically, the terminal may not camp on the third cell, and then may not verify whether the third cell has the NAS rejection fault for the call service. Apparently, in a possible case, a module in the terminal may not provide a verification result of whether the third cell has the NAS rejection fault for the call service), but directly determines, according to the third fault information, that the third cell has the NAS rejection fault for the call service. In addition, based on this, if the current service is the call service, measures are taken (for example, the signal measurement result of the third cell is not reported), to prevent interruption of a current call caused by handover of the terminal to the third cell for camping. If the current service is not the call service, even if the terminal is handed over to the third cell for camping, the current service may not be affected. Therefore, no measures may be taken to prevent the handover of the terminal to the third cell for camping.

In a possible embodiment, the method further includes: acquiring third fault information when the second cell is camped on, the third fault information indicating that a third cell has a NAS rejection fault for the call service; reducing a signal measurement result of the third cell to a value less than or equal to a third threshold when the second cell is camped on, a current service is the call service, and a signal measurement result of the third cell is greater than the third threshold; and not adjusting the signal measurement result of the third cell when the second cell is camped on, the current service is not the call service, and the signal measurement result of the third cell is greater than the third threshold.

Based on the possible embodiment, it is conducive to preventing an influence on user experience due to interruption of a call caused by handover to/selection/reselection of the third cell for camping by the terminal during execution of the call service.

In a possible embodiment, the method further includes: acquiring third fault information when the second cell is camped on, the third fault information indicating that a third cell has a NAS rejection fault for the call service; marking the third cell as having the NAS rejection fault for the call service when the second cell is camped on and the current service is the call service; reducing the signal measurement result of the third cell to a value less than or equal to a second threshold when the signal measurement result of the third cell is marked as having the NAS rejection fault for the call service is greater than the second threshold during a call; updating the signal measurement result of the third cell to an actual signal measurement result of the third cell when the call ends; and not marking the third cell as having the NAS rejection fault for the call service when the second cell is camped on and the current service is not the call service.

Based on the possible embodiment, it is conducive to preventing an influence on user experience due to interruption of a call caused by the terminal's handover to/selection/reselection of the third cell for camping during execution of the call service.

According to a second aspect, this application further provides a cell fault processing method, the method including:
acquiring third fault information when a second cell is camped on, the third fault information indicating that a third cell has a NAS rejection fault for a call service; not reporting a signal measurement result of the third cell when the second cell is camped on, a current service is the call service, and a current actual signal measurement result of the third cell meets a measurement reporting condition; and reporting the signal measurement result of the third cell when the second cell is camped on, the current service is not the call service, and a current actual signal measurement result of the second cell meets the measurement reporting condition.

Based on the method described in the second aspect, it is conducive to preventing an influence on user experience due to interruption of a call caused by handover of the terminal to the third cell for camping during execution of the call service.

In a possible embodiment, the first cell is not selected/reselected for camping when the second cell is camped on, the current service is the call service, and the current actual signal measurement result of the first cell meets a cell selection/reselection condition for selecting/reselecting the first cell for camping; and the first cell is selected/reselected for camping when the second cell is camped on, the current service is not the call service, and the current actual signal measurement result of the first cell meets the cell selection/reselection condition for selecting/reselecting the first cell for camping.

Based on the possible embodiment, it is conducive to preventing an influence on user experience due to interruption of a call caused by the terminal's selection or reselection of the third cell for camping during execution of the call service.

According to a third aspect, this application further provides a cell fault processing method, the method including:
acquiring third fault information when a second cell is camped on, the third fault information indicating that a third cell has a NAS rejection fault for a call service; reducing a signal measurement result of the third cell to a value less than or equal to a third threshold when the second cell is camped on, a current service is the call service, and a signal measurement result of the third cell is greater than the third threshold; and not adjusting the signal measurement result of the third cell when the second cell is camped on, the current service is not the call service, and the signal measurement result of the third cell is greater than the third threshold.

Based on the method described in the third aspect, it is conducive to preventing an influence on user experience due to interruption of a call caused by the terminal's handover to/selection/reselection of the third cell for camping during execution of the call service.

According to a fourth aspect, this application further provides a cell fault processing method, the method including:
acquiring third fault information when a second cell is camped on, the third fault information indicating that a third cell has a NAS rejection fault for a call service; marking the third cell as having the NAS rejection fault for the call service when the second cell is camped on and a current service is the call service; reducing a signal measurement result of the third cell to a value less than or equal to a second threshold when the signal measurement result of the third cell marked as having the NAS rejection fault for the call service is greater than the second threshold during a call; updating the signal measurement result of the third cell to an actual signal measurement result of the third cell when the call ends; and not marking the third cell as having the NAS rejection fault for the call service when the second cell is camped on and the current service is not the call service.

Based on the method described in the fourth aspect, it is conducive to preventing an influence on user experience due to interruption of a call caused by the terminal's handover to/selection/reselection of the third cell for camping during execution of the call service.

In a possible embodiment, a specific implementation of marking the third cell as having the NAS rejection fault for the call service is: marking the third cell as having the NAS rejection fault for the call service, and starting a second timer; and the method further includes: removing the marking indicating that the third cell has the NAS rejection fault for the call service if the second timer times out.

Based on the possible embodiment, it is beneficial for the terminal to subsequently re-camp on the third cell after fault recovery.

In a possible embodiment, the method further includes: acquiring fourth fault information, the fourth fault information indicating a faulty cell, a fault type of the cell, and a fault service of the cell; and removing the marking indicating that the third cell has the NAS rejection fault for the call service if the fourth fault information does not indicate that the third cell has the NAS rejection fault for the call service.

Based on the possible embodiment, it is beneficial for the terminal to subsequently re-camp on the third cell after fault recovery.

According to a fifth aspect, this application further provides a cell fault processing method, the method including:
acquiring first fault information, the first fault information indicating that a first cell has a stalling fault for a first service, and the first service being a data service or a call service; verifying, according to the first fault information, whether the first cell has the stalling fault for the first service in the case of camping on the first cell and being in a connected state; and disregarding the first fault information or not reducing a signal measurement result of the first cell if it is verified that the first cell does not have the stalling fault for the first service (specifically, when a measurement report is sent, a first signal measurement result of the first cell carried in the measurement report may be a current actual signal measurement result of the first cell). Optionally, "disregarding the first fault information" may mean disregarding that the first cell has the stalling fault for the first service indicated by the first fault information.

Based on the method described in the fifth aspect, if it is determined through verification that the first cell does not have the stalling fault for the first service, the terminal does not perform an escape operation, to prevent degradation of the communication quality of the terminal due to camping on a cell with worse signal quality than the current camping cell.

In a possible embodiment, a specific implementation of verifying, according to the first fault information, whether the first cell has the stalling fault for the first service is: verifying, multiple times within a second time period according to the first fault information, whether the first cell has the stalling fault for the first service; and
a specific implementation of disregarding the first fault information or not reducing a signal measurement result of the first cell if it is verified that the first cell does not have the stalling fault for the first service is:
disregarding the first fault information or not reducing the signal measurement result of the first cell if it is not verified for a preset consecutive count that the first cell has the stalling fault for the first service when the second time period expires.

Based on the possible embodiment, the terminal can perform fault verification on the first cell multiple times, thereby helping to improve accuracy of the fault verification.

In a possible embodiment, a specific implementation of verifying, according to the first fault information, whether the first cell has the stalling fault for the first service is: verifying, multiple times within a second time period according to the first fault information, whether the first cell has the stalling fault for the first service; and
a specific implementation of disregarding the first fault information or not reducing a signal measurement result of the first cell if it is verified that the first cell does not have the stalling fault for the first service is: disregarding the first fault information or not reducing the signal measurement result of the first cell if a first ratio is less than a ratio threshold, the first ratio being a ratio of a count of verifications for the first cell having the stalling fault for the first service within the second time period to a total verification count within the second time period.

Based on the possible embodiment, the terminal can perform fault verification on the first cell multiple times, thereby helping to improve accuracy of the fault verification.

In a possible embodiment, the method further includes: acquiring third fault information when the second cell is camped on, the third fault information indicating that a third cell has a NAS rejection fault for the call service; not reporting a signal measurement result of the third cell when the second cell is camped on, a current service is the call service, and an actual signal measurement result of the third cell meets the measurement reporting condition; and reporting the signal measurement result of the third cell when the second cell is camped on, the current service is not the call service, and an actual signal measurement result of the second cell meets the measurement reporting condition.

Based on the possible embodiment, it is conducive to preventing an influence on user experience due to interruption of a call caused by handover of the terminal to the third cell for camping during execution of the call service.

In a possible embodiment, the first cell is not selected/reselected for camping when the second cell is camped on, the current service is the call service, and the current actual signal measurement result of the first cell meets a cell selection/reselection condition for selecting/reselecting the first cell for camping; and the first cell is selected/reselected for camping when the second cell is camped on, the current service is not the call service, and the current actual signal measurement result of the first cell meets the cell selection/reselection condition for selecting/reselecting the first cell for camping.

Based on the possible embodiment, it is conducive to preventing an influence on user experience due to interruption of a call caused by the terminal's selection or reselection of the third cell for camping during execution of the call service.

In a possible embodiment, the method further includes: acquiring third fault information when the second cell is camped on, the third fault information indicating that a third cell has a NAS rejection fault for the call service; reducing a signal measurement result of the third cell to a value less than or equal to a third threshold when the second cell is camped on, a current service is the call service, and a signal measurement result of the third cell is greater than the third threshold; and not adjusting the signal measurement result of the third cell when the second cell is camped on, the current service is not the call service, and the signal measurement result of the third cell is greater than the third threshold.

Based on the possible embodiment, it is conducive to preventing an influence on user experience due to interruption of a call caused by the terminal's handover to/selection/reselection of the third cell for camping during execution of the call service.

In a possible embodiment, the method further includes: acquiring third fault information when the second cell is camped on, the third fault information indicating that a third cell has a NAS rejection fault for the call service; marking the third cell as having the NAS rejection fault for the call service when the second cell is camped on and the current service is the call service; reducing the signal measurement result of the third cell to a value less than or equal to a second threshold when the signal measurement result of the third cell marked as having the NAS rejection fault for the call service is greater than the second threshold during a call; updating the signal measurement result of the third cell to an actual signal measurement result of the third cell when the call ends; and not marking the third cell as having the NAS rejection fault for the call service when the second cell is camped on and the current service is not the call service.

Based on the possible embodiment, it is conducive to preventing an influence on user experience due to interruption of a call caused by the terminal's handover to/selection/reselection of the third cell for camping during execution of the call service.

In a possible embodiment, a specific implementation of marking the third cell as having the NAS rejection fault for the call service is: marking the third cell as having the NAS rejection fault for the call service, and starting a second timer; and the method further includes: removing the marking indicating that the third cell has the NAS rejection fault for the call service if the second timer times out.

Based on the possible embodiment, it is beneficial for the terminal to subsequently re-camp on the third cell after fault recovery.

In a possible embodiment, the method further includes: acquiring fourth fault information, the fourth fault information indicating a faulty cell, a fault type of the cell, and a fault service of the cell; and removing the marking indicating that the third cell has the NAS rejection fault for the call service if the fourth fault information does not indicate that the third cell has the NAS rejection fault for the call service.

Based on the possible embodiment, it is beneficial for the terminal to subsequently re-camp on the third cell after fault recovery.

According to a sixth aspect, this application provides a communication apparatus. The apparatus may be a terminal, an apparatus in a terminal, or an apparatus that can be used in conjunction with a terminal. Alternatively, the communication apparatus may be a chip system. The communication apparatus may perform the method in the first aspect, the second aspect, the third aspect, the fourth aspect, or the fifth aspect. Functions of the communication apparatus may be implemented by using hardware or may be implemented by using hardware executing corresponding software. The hardware or the software includes one or more units or modules corresponding to the foregoing functions. The unit or module may be software and/or hardware. For operations performed by the communication apparatus and beneficial effects, refer to the method and the beneficial effects in the first aspect, the second aspect, the third aspect, the fourth aspect, or the fifth aspect. Details are not described again.

According to a seventh aspect, this application provides a communication apparatus. The communication apparatus includes a processor. When the processor invokes a computer program in a memory, the method in any one of the first aspect to the fifth aspect is performed.

According to an eighth aspect, this application provides a communication apparatus. The communication apparatus includes a processor and a memory, the processor being coupled to the memory; and the processor being configured to implement the method in any one of the first aspect to the fifth aspect.

According to a ninth aspect, this application provides a communication apparatus, including a processor, a memory, an input interface, and an output interface, the input interface being configured to receive information from another communication apparatus other than the communication apparatus, the output interface being configured to output information to the another communication apparatus other than the communication apparatus, and the processor invoking a computer program stored in the memory to cause the communication apparatus to perform the method in any one of the first aspect to the fifth aspect.

According to a tenth aspect, this application provides a chip system, applied to a terminal, the chip system including at least one processor and an interface, the interface being configured to receive an instruction and transmit the instruction to the at least one processor; and the at least one processor executing the instruction to implement the method in any one of the first aspect to the fifth aspect.

According to an eleventh aspect, this application provides a computer-readable storage medium, the storage medium storing a computer program or an instruction, and when the computer program or the instruction is executed by a communication apparatus, the method in any one of the first aspect to the fifth aspect being implemented.

According to a twelfth aspect, this application provides a computer program product including instructions, when a computer reads and executes the computer program product, the computer being caused to perform the method in any one of the first aspect to the fifth aspect.

### BRIEF DESCRIPTION OF DRAWINGS

FIG. 1 is a schematic diagram of a possible and non-limiting system according to an embodiment of this application;
FIG. 2 is a schematic diagram of cell camping according to an embodiment of this application;
FIG. 3 is a schematic flowchart of a cell fault processing method according to an embodiment of this application;
FIG. 4 is a schematic flowchart of another cell fault processing method according to an embodiment of this application;
FIG. 5 is a schematic diagram of one cell failure verification according to an embodiment of this application;
FIG. 6 is a schematic diagram of another cell failure verification according to an embodiment of this application;
FIG. 7 is a schematic flowchart of another cell fault processing method according to an embodiment of this application;
FIG. 8 is a schematic flowchart of another cell fault processing method according to an embodiment of this application;
FIG. 9 is a schematic flowchart of another cell fault processing method according to an embodiment of this application;
FIG. 10 is a schematic flowchart of another cell fault processing method according to an embodiment of this application;
FIG. 11A and FIG. 11B are a schematic flowchart of another cell fault processing method according to an embodiment of this application;
FIG. 12 is a schematic diagram of a hardware structure of a terminal 120 according to an embodiment of this application; and
FIG. 13 is a block diagram of a software structure of a terminal 120 according to an embodiment of this application.

### DESCRIPTION OF EMBODIMENTS

The terms "first", "second", and the like in the specification, the claims, and the accompanying drawings of this application are intended to distinguish between different objects, instead of describing a particular sequence. In addition, the terms "include/comprise", "have", and any variant thereof are intended to cover a non-exclusive inclusion. For example, processes, methods, systems, products, or devices including a series of steps or units are not limited to the listed steps or units, but instead, optionally include other steps or units not listed, or optionally include other steps or units inherent to these processes, methods, products, or devices.

"Embodiment" mentioned in the specification means that particular features, structures, or characteristics described with reference to the embodiment may be included in at least one embodiment of this application. The phrase appearing in various places in the specification does not necessarily refer to the same embodiment or an independent or alternative embodiment that is exclusive of other embodiments. A person skilled in the art explicitly or implicitly understands that the embodiments described in the specification may be combined with other embodiments.

In this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate three cases: only A exists, only B exists, and both A and B exist, where A and B may be singular or plural. The character "/" in this specification generally indicates an "or" relationship between the associated objects. "At least one of the following items" or a similar expression means any combination of these items, including a single item or any combination of a plurality of items. For example, at least one of a, b, and c may indicate a, or b, or c, or "a and b", or "a and c", or "b and c", or "a, b, and c", where a, b, and c may be singular or plural.

To improve communication quality of a terminal, this application provides a cell fault processing method and a communication apparatus.

**To better understand embodiments of this application, the following first introduces some technical terms involved in the embodiments of this application.**

### I. idle state (i.e., idle state) and connected state (i.e., connected state)

In some embodiments of this application, states of a terminal may include a connected state and an idle state. When the terminal is powered on but does not establish a radio resource control (radio resource control, RRC) connection with a network side, the terminal is in the idle state. However, when the terminal establishes the RRC connection with the network side, the terminal is in the connected state.

In some other embodiments of this application, the states of the terminal may further include an inactive state (i.e., inactive state). The inactive state is also referred to as a low-power state.

It may be understood that processes that the terminal in the idle state needs to complete include public land mobile network (public land mobile network, PLMN) selection, cell selection/cell reselection, position registration, and the like.

### II. Cell (cell)

A cell is an area within wireless coverage of an access network device (for example, a base station). In this area, the terminal may reliably communicate with the access network device by using a wireless signal. It may be understood that coverage of each access network device may be divided into one or more cells, and each cell may correspond to one or more frequency points. It may also be understood that each cell is an area formed by coverage of one or more frequency points.

In some embodiments of this application, different cells may correspond to a same access network device. That is, an access network device to which a cell A belongs and an access network device to which a cell B belongs may be the same access network device. For example, the cell A and the cell B may be managed by a same base station. In this case, the cell A and the cell B may be co-sited.

In some embodiments of this application, different cells may correspond to different access network devices. That is, the access network device to which the cell A belongs and the access network device to which the cell B belongs may be different access network devices. For example, the cell A and the cell B may be managed by different access network devices. In another example, the cell A and the cell B may be managed by a same access network device, but radio frequency processing units corresponding to the cell A and the cell B are different radio frequency processing units in the same access network device.

An adjacent cell, also referred to as a neighbour cell or a neighbouring cell, refers to an area within wireless coverage of an access network device that is adjacent to and has a physical position association with a current serving cell and transmits signals on a same frequency or different frequencies. That is, the adjacent cell refers to a cell connected to or adjacent to the current serving cell. Generally, the adjacent cell may be understood as a "surrounding cell" of the current serving cell.

### III. Cell handover (handover, HO)

The cell handover refers to a process of migrating a communication link between the terminal and a current access network device to another access network device in mobile communication. In a wireless communication system, when the terminal moves from a cell to or approaches another cell, handover is required to keep communication of the terminal uninterrupted. The handover may be intra-site handover or inter-site handover, which is not specifically limited in this application. The intra-site handover means that a source cell and a target cell belong to a same access network device (for example, a base station). The inter-site handover means that the source cell and the target cell belong to different access network devices (for example, base stations).

In this application, the source cell represents a cell providing a service for the terminal before handover, and the target cell represents a cell providing a service for the terminal after handover. For ease of description, in this application, an access network device corresponding to the source cell is recorded as a source access network device, and an access network device corresponding to the target cell is recorded as a target access network device. It may be understood that the source access network device and the target access network device may be a same network device or may be different access network devices.

The terminal may receive a measurement indication sent by a current camping cell, and measure and evaluate signal quality and the like of the cell based on the measurement indication, to obtain a measurement result. The terminal may generate a corresponding measurement report (Measurement Report, MR) based on the measurement result, and send the measurement report to the current camping cell. After receiving the measurement report, the current camping cell of the terminal may communicate with the target cell based on the measurement report. If the target cell allows access, the current camping cell of the terminal may instruct the terminal to perform cell handover. It may be understood that the cell handover is performed when the terminal is in the connected state, and the cell handover may keep communication of the terminal uninterrupted.

The following describes a measurement-based handover procedure.

Step I: A source access network device delivers a measurement control message to a terminal.

The measurement control message may be an RRC connection reconfiguration message (RRC Connection Reconfiguration) carrying a measConfig information element. The measurement control message is delivered to the terminal in the form of a measId. The measId is a database measurement configuration entry index. Each measId corresponds to two elements: a measObjectId and a reportConfigId. The measObjectId is a measurement object identifier and corresponds to a measurement object configuration item. The reportConfigId is a measurement report identifier, and corresponds to a measurement report configuration item. The two elements are located in an initial portion of a same measConfig information element. In short, the access network device compiles a plurality of measurement configuration items into a mapping relationship table, and sends to the terminal configurations and mapping relationships that correspond to the mapping relationship table. The terminal may carry the corresponding measId when subsequently sending a measurement report to the access network device, so that the access network device can correctly parse and process measurement data.

Correspondingly, the terminal may receive the measurement control message sent by the access network device.

Step II: The terminal performs measurement configuration based on the measurement control message, and sends a measurement report to the source access network device.

The terminal measures cells (for example, including the source cell, an adjacent cell of the source cell, and the like) on a specified frequency point based on measurement configuration items included in the measurement control message delivered by the access network device, and sends a measurement report to the source access network device.

Correspondingly, the access network device may receive the measurement report sent by the terminal.

Step III: The source access network device performs handover decision and handover preparation.

After receiving the measurement report sent by the terminal, the source access network device makes handover decision based on the measurement report, to determine a target cell. That is, the source access network device determines, based on the measurement report, which cell to perform handover to. After making the handover decision, the source access network device may perform handover preparation, that is, perform resource reservation (for example, the source access network device requests the target access network device to prepare a resource needed by the terminal), and generate an RRC connection reconfiguration message.

Step IV: The source access network device sends an RRC connection reconfiguration message to the terminal.

After performing handover decision and handover preparation, the source access network device may execute handover. Specifically, the source access network device sends an RRC connection reconfiguration message (RRC Connection Reconfiguration) to the terminal. The RRC connection reconfiguration message (RRC Connection Reconfiguration) includes a parameter required by the terminal to access the target cell. For example, the parameter required by the terminal to access the target cell may include one or more of the following: a radio resource configuration, a physical resource configuration, and the like, such as a cell ID, a carrier frequency, and target power.

For a long term evolution (long term evolution, LTE) network, the source access network device notifies the terminal of related information of the target cell by using an information element (Information Element, IE), that is, mobilityControlInfo, included in the RRC connection reconfiguration message.

For a new radio (New Radio, NR) network, the source access network device notifies the terminal of the related information of the target cell by using reconfiguration WithSync in spCellConfig included in the RRC connection reconfiguration message.

Correspondingly, the terminal may receive the RRC connection reconfiguration message sent by the source access network device.

Step V: The terminal performs handover to the target cell based on the RRC connection reconfiguration message, and sends the RRC connection reconfiguration message to the target cell.

The terminal interrupts a wireless connection with the source access network device after receiving the RRC connection reconfiguration message sent by the source access network device, and starts to establish a new wireless connection with the target access network device. When the terminal successfully establishes the wireless connection with the target access network device, the terminal sends an RRC connection reconfiguration complete message (RRC Connection Reconfiguration Complete) to the target access network device, to indicate that the handover procedure has been completed for the terminal.

### IV. Measurement report (measurement report, MR)

The 3rd generation partnership project (3rd Generation Partnership Project, 3GPP) specification proposes a set of predefined measurement report mechanisms executed by the terminal. These predefined metric report types are referred to as "events (EVENT)". A type of an "event" that the terminal needs to report is specified by an RRC signaling message (for example, the RRC connection reconfiguration message in step I of the foregoing handover procedure) sent by the access network device.

An event type of a measurement report is specifically described below.

### (1) Intra-system handover event type

Event A1 (Event A1): Quality of a serving cell is higher than an absolute threshold (Serving becomes better than threshold), in units of dBm.

Event A2 (Event A2): The quality of the serving cell is lower than an absolute threshold (Serving becomes worse than threshold), in units of dBm.

Event A3 (Event A3): A neighbouring cell (or referred to as a neighbour cell, that is, an adjacent cell) is better than a current serving cell by an absolute value (Neighbour becomes offset better than SpCell), in units of dB.

Event A4 (Event A4): Quality of the neighbouring cell is higher than an absolute threshold (Neighbour becomes better than threshold), in units of dBm.

Event A5 (Event A5): The quality of the serving cell is lower than an absolute threshold threshold1, and the quality of the neighbouring cell is higher than an absolute threshold threshold2 (SpCell becomes worse than threshold1 and neighbour becomes better than threshold2), in units of dBm.

Event A6 (Event A6): The quality of the neighbouring cell is higher than quality of a secondary cell (Secondary Cell, SCell) by an absolute threshold (Neighbour becomes offset better than SCell), in units of dB.

### (2) Inter-system handover event type

Event B1 (Event B1): An inter-system neighbouring cell is better than an absolute threshold (Inter RAT neighbour becomes better than threshold), in units of dBm.

Event B2 (Event B2): The serving cell is lower than an absolute threshold threshold1, and the inter-system neighbouring cell is better than an absolute threshold threshold2 (PCell becomes worse than threshold1 and inter RAT neighbour becomes better than threshold2), in units of dBm.

### V. Cell selection

When the terminal is powered on, or the terminal switches from a connected state to an idle state (for example, enters a flight mode), or the terminal has a radio link failure (radio link failure, RLF), or the terminal enters a network coverage, or the terminal selects a PLMN, the terminal needs to perform cell selection, that is, the terminal needs to select a cell for camping.

In a cell selection procedure, the terminal may first scan a plurality of frequency points to obtain energy of the plurality of frequency points, and then sort the plurality of frequency points in descending order based on the energy of the plurality of frequency points. According to a frequency sorting result, the terminal may first measure signal quality of a cell on a highest-energy frequency point, such as reference signal received power (reference signal received power, RSRP) and reference signal received quality (reference signal received quality, RSRQ). Whether the cell meets an access condition is determined based on the signal quality of the cell, and if the access condition is met, the cell is selected for camping. If a cell meeting the access condition is not found on the highest-energy frequency point, a cell search is performed on a next frequency point according to the frequency sorting result, and so on.

### VI. Cell reselection

According to the foregoing, after performing cell selection, the terminal can camp on a suitable cell. However, the cell on which the terminal camps is not necessarily an optimal cell in a nearby area. Therefore, after successfully camping on a cell, the terminal may immediately perform cell reselection. It should be noted that the cell reselection is performed by the terminal in an idle state, and is controlled by the terminal.

In some embodiments of this application, the terminal can start cell reselection only after camping on a selected cell for a particular time (e.g., 1 s). After the terminal successfully camps on a cell, if an RRC connection is not initiated (that is, neither an RRC connection establishment procedure nor an RRC connection reestablishment procedure is initiated), the terminal will start cell measurement in the idle state. If the current camping cell has worse signal quality while another cell has better signal quality, the terminal will attempt reselection of the cell with better signal quality for camping. In this case, the terminal may first attempt to receive a system message from the cell with better signal quality, and then determine, based on the system message from the cell, whether the cell is suitable for camping. If the terminal determines, based on the system message from the cell, that the cell is suitable for camping, the terminal will reselect the cell for camping, restart measurement, and continue to monitor the signal quality of the current camping cell and the another cell.

It may be understood that the signal quality as referred to in this application may include signal strength. Specifically, "worse signal quality" in this application may refer to lower signal strength, and "better signal quality" in this application may refer to higher signal strength.

### VII. Fault type

The fault type refers to a type of a fault occurring in a cell. For example, the fault type may be stalling, call failure, non-access stratum (non-access stratum, NAS) rejection, or the like.

### VIII. NAS rejection

ANAS procedure is performed after an access stratum (access stratum, ASN) procedure. The AS procedure refers to a signaling procedure in which a terminal and an access network device need to participate in processing. The NAS procedure refers to a signaling procedure in which a terminal and a core network device need to participate in processing. A signaling path is established between the terminal and the core network device by using the AS procedure, so that the NAS procedure can be performed subsequently. The NAS rejection means that NAS layer signaling sent by the terminal is rejected by a network side. For example, the NAS rejection includes: tracking area update (tracking area update, TAU) rejection, mobility registration update (mobility registration update, MRU) rejection, or service request (service request, SR) rejection.

### IX. Fault service

The fault service refers to a service in which a fault occurs in a cell. For example, the fault service may be making a call, watching a video, Internet access, or the like.

### X. Fault map information

The fault map information may indicate which cells are faulty cells and fault types of the cells. Optionally, the fault map information may further indicate fault services of the cells.

### XI. Electronic fence information

The electronic fence information may indicate an area delineated by an electronic fence and fault types existing in the area delineated by the electronic fence. Optionally, the electronic fence information may further indicate a fault service of a cell.

**The following describes a communication system as referred to in the embodiments of this application.**

The embodiments of this application are applicable to a long term evolution (long term evolution, LTE) system, a 5th generation mobile communication (5th generation mobile communication, 5G) system, or a post-5G evolved communication system such as a 6th generation mobile communication (6th generation mobile communication, 6G) system, and satellite communication and short-range wireless communication systems. The wireless communication system as referred to in the embodiments of this application includes, but is not limited to, three application scenarios of the 5G/6G mobile communication system: enhanced mobile broadband (enhanced mobile broadband, eMBB), ultra reliable low latency communication (ultra reliable low latency communication, URLLC), massive machine type of communication (massive machine type of communication, mMTC), a long range (long range, LoRa) system, or an Internet of Vehicles system.

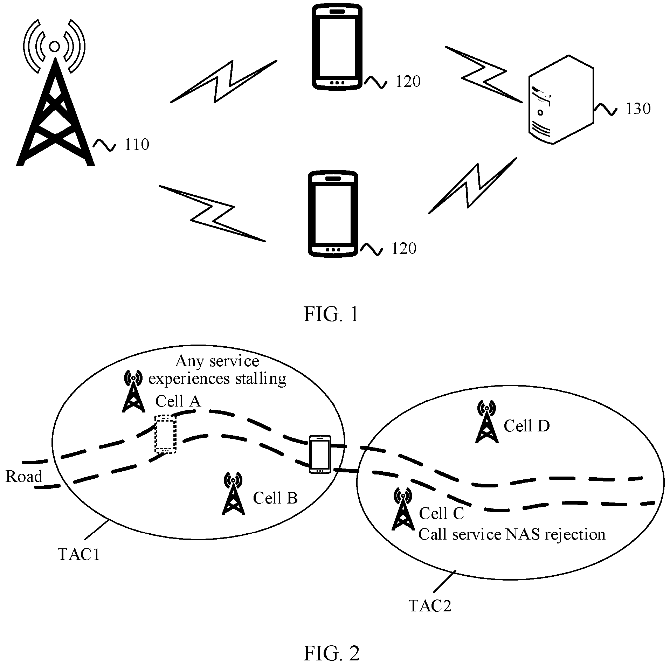

FIG. 1 illustrates a schematic diagram of a possible and non-limiting system. As shown in FIG. 1, a communication system 10 includes an access network device 110, terminals 120, and a cloud server 130. FIG. 1 illustrates an example in which the communication system 10 includes one access network device 110, two terminals 120, and one cloud server 130. The communication system 10 may further include a larger number of access network devices 110, terminals 120, and cloud servers 130, which is not limited in this embodiment of this application.

### I. Access network device 110

The access network device 110 may also be sometimes referred to as a radio access network (radio access network, RAN) node, a RAN entity, an access node, or the like, forms part of a communication system, and is configured to help the terminal 120 implement radio access. In a possible scenario, the access network device 110 may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a WiFi system, or the like. The access network device 110 may be a macro base station, a micro base station or an indoor station, a relay node or a donor node, or a radio controller in a CRAN scenario. In a possible embodiment, the access network device 110 may alternatively be a server, a wearable device, a vehicle, a vehicle-mounted device, or the like. For example, an access network device in a vehicle to everything (vehicle to everything, V2X) technology may be a road side unit (road side unit, RSU).

### II. Terminal 120

The terminal 120 may also be referred to a terminal, a user equipment (user equipment, UE), a mobile station, a mobile terminal, an electronic device, or the like. The terminal 120 may be widely used in various scenarios, for example, device-to-device (device-to-device, D2D), vehicle to everything (vehicle to everything, V2X), machine-type communication (machine-type communication, MTC), internet of things (internet of things, IOT), virtual reality, augmented reality, industrial control, automatic driving, telemedicine, smart grid, smart furniture, smart office, smart wearable, smart transportation, smart city, and the like. The terminal 120 may be a mobile phone, a tablet computer, a computer with a wireless transceiver function, a wearable device, a vehicle, an unmanned aerial vehicle, a helicopter, an airplane, a ship, a robot, a robot arm, a smart home device, or the like.

### III. Cloud server 130

Due to reasons such as software/hardware faults in a network-side device, network parameter misconfiguration, or inadequate network optimization, numerous cell (cell)-level faults or tracking area code (tracking area code, TAC)-level faults exist in an existing network. An access network device may include one or more cells. A TAC area is an area set for paging in a mobile communication system. One TAC area may include one or more cells.

The terminal 120 may detect whether a fault occurs in a cell. After detecting a cell fault, the terminal 120 may report fault information to the cloud server 130. For example, the fault information may indicate a faulty cell and a fault type of the cell. Optionally, the fault information may further indicate a fault service. The cloud server 130 may calculate fault map information or electronic fence information based on fault information reported by a large quantity of terminals 120. After determining the fault map information or the electronic fence information, the cloud server 130 may deliver the fault map information or the electronic fence information to the terminal 120. Therefore, the terminal 120 may select a most appropriate cell to camp on based on the fault map information or the electronic fence information, to improve communication quality of the terminal.

For example, as shown in FIG. 2, a TAC area 1 includes a cell A and a cell B. A TAC area 2 includes a cell C and a cell D. The cloud server 130 sends the fault map information to the terminal 120. The fault map information indicates that the cell A has a stalling problem with any service, and the cell C has a NAS rejection fault for a call service. After the terminal 120 enters TAC1, the terminal 120 camps on the cell A. After the terminal 120 camps on the cell A, to ensure authenticity of the faulty cell, the terminal 120 may first verify whether the cell A has a stalling problem. If the stalling problem indeed occurs, the terminal 120 may escape to another fault-free cell in time for camping, to ensure communication quality of the terminal 120, for example, perform handover to the cell B for camping. For example, the terminal 120 may reduce a signal measurement result (such as RSRP) of the cell A, and send a measurement report to the access network device 110 based on the reduced signal measurement result of the cell A, to perform handover to the another fault-free cell for camping. If it is verified that the cell A does not have a stalling problem, the terminal 120 may disregard that the cell A has a stalling problem with any service, and the terminal 120 does not perform an escape operation, to prevent degradation of the communication quality of the terminal 120 due to camping on a cell with worse signal quality than the current camping cell.

Since the cell C has a NAS rejection fault for a call service, if the terminal 120 performs handover to the cell C during a call, the call of the terminal 120 may be interrupted, affecting user experience. Therefore, in this embodiment of this application, RSRP of the cell C is not reported when the terminal 120 camps on the cell B, the terminal 120 is performing a call service, and current actual RSRP of the cell C meets a measurement reporting condition. The RSRP of the cell C is reported when the terminal 120 camps on the cell B, the terminal 120 does not perform the call service, and the current actual RSRP of the cell C meets the measurement reporting condition. In this way, interruption of the call of the terminal 120 caused by handover of the terminal 120 to the cell C for camping during execution of the call service can be prevented.

The cell C is not selected/reselected for camping when the terminal 120 camps on the cell B, the terminal 120 is performing the call service, and the current actual RSRP of the cell C meets a cell selection/reselection condition for selecting/reselecting the cell C for camping. The cell C is selected/reselected for camping when the terminal 120 camps on the cell B, the terminal 120 does not perform the call service, and the current actual RSRP of the cell C meets the cell selection/reselection condition for selecting/reselecting the cell C for camping. In this way, interruption of the call of the terminal 120 caused by selection/reselection of the cell C for camping by the terminal 120 during execution of the call service can be prevented.

**The cell fault processing method provided in this embodiment of this application is further described below.**

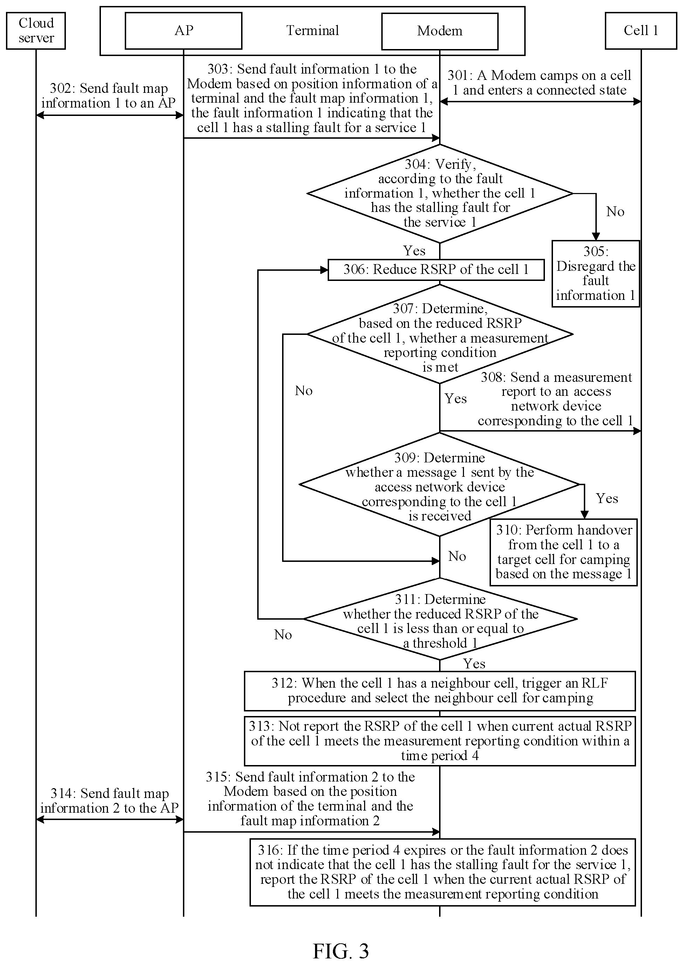

Referring to FIG. 3, FIG. 3 is a schematic flowchart of a cell fault processing method according to an embodiment of this application.

301: A Modem in a terminal camps on a cell 1, and enters a connected state.

In this embodiment of this application, step 301 is performed before step 304. For example, step 301 is performed before step 302. In another example, step 301 may be performed after step 302 and before step 303. In another example, step 301 may be performed after step 303 and before step 304. Alternatively, step 301 may be performed simultaneously with step 302 or step 303. This is not limited in this embodiment of this application.

That is, the Modem may first camp on the cell 1, enter the connected state, receive fault information 1 sent by an AP, and then perform step 304. Alternatively, the Modem may first receive the fault information 1 sent by the AP, camp on the cell 1, enter the connected state, and then perform step 304.

302: A cloud server sends fault map information 1 to an AP in the terminal. Correspondingly, the AP may receive the fault map information 1.

For descriptions about the fault map information, refer to the descriptions in the introduction to the technical terms above. Details are not described herein again. In this embodiment of this application, the fault map information may alternatively be replaced with electronic fence information or other information that is used for indicating a cell or area fault and is delivered by the cloud server. In this embodiment of this application, the fault map information is used as an example for description.

In a possible embodiment, the cloud server may actively push the fault map information to the AP. For example, the cloud server may actively push the fault map information to the AP regularly. In another example, when finding that the fault map information is updated, the cloud server actively pushes the updated fault map information to the AP.

In a possible embodiment, the AP may actively acquire the fault map information from the cloud server. For example, the AP may actively acquire the fault map information from the cloud server regularly. In another example, the AP may actively acquire the latest fault map information from the cloud server based on scenario triggering (for example, after the terminal is connected to WiFi for a period of time and the screen goes off).

303: The AP sends fault information 1 to the Modem in the terminal based on position information of the terminal and the fault map information 1, the fault information 1 indicating that the cell 1 has a stalling fault for a service 1. Correspondingly, the Modem may receive the fault information 1.

In this embodiment of this application, the service 1 may be a data service or a call service. The data service may also be referred to as an Internet access service.

In this embodiment of this application, the fault information 1 may indicate a faulty cell, a fault service of the faulty cell, and a fault type of the faulty cell.

In this embodiment of this application, the fault information 1 may indicate one or more faulty cells and a fault service and a fault type that correspond to each faulty cell. For example, content indicated by the fault information 1 may be shown in Table 1 below.

**Table 1**

| Cell identifier | Fault service | Fault type |
|---|---|---|
| Identifier of cell 1 | Call | Stalling |
| Identifier of cell 2 | Internet access | Stalling |
| Identifier of cell 3 | Call | NAS rejection |

In this embodiment of this application, the fault information 1 may indicate one or more fault services for a same cell. For example, content indicated by the fault information 1 may be shown in Table 2 below. The fault information 1 indicates one fault service (that is, a call service) for the cell 1, indicates a plurality of fault services (that is, all services) for the cell 2, and indicates a plurality of fault services (that is, all services) for the cell 3.

**Table 2**

| Cell identifier | Fault service | Fault type |
|---|---|---|
| Identifier of cell 1 | Call | Stalling |
| Identifier of cell 2 | All services | Stalling |
| Identifier of cell 3 | All services | NAS rejection |

In this embodiment of this application, the fault information 1 may indicate one or more fault types for a same cell. For example, content indicated by the fault information 1 may be shown in Table 3 below. The fault information 1 indicates 1 fault type (that is, stalling) for the cell 1, indicates 2 fault types (that is, stalling and NAS rejection) for the cell 2, and indicates 1 fault type (that is, NAS rejection) for the cell 3.

**Table 3**

| Cell identifier | Fault service | Fault type |
|---|---|---|
| Identifier of cell 1 | Call | Stalling |
| Identifier of cell 2 | All services | Stalling and NAS rejection |
| Identifier of cell 3 | All services | NAS rejection |

In a possible embodiment, the fault information 1 may explicitly indicate a fault service of a faulty cell or implicitly indicate the fault service of the faulty cell. For example, "the fault information 1 explicitly indicates a fault service of a faulty cell" may be understood as follows: the fault information 1 includes indication information, and the indication information indicates the fault service of the faulty cell. For example, the indication information may be a name or an identifier of the fault service. "The fault information 1 implicitly indicates the fault service of the faulty cell" may be understood as follows: when the fault information 1 does not include indication information used for indicating the fault service of the faulty cell, the fault information 1 indicates that the fault service of the faulty cell is an Internet access service, or indicates that the fault service of the faulty cell is a data service, or indicates that the fault service of the faulty cell is all services. That is, when the fault information 1 does not include the indication information used for indicating the fault service of the faulty cell, the Modem may consider that the fault service of the faulty cell is the Internet access service, or consider that the fault service of the faulty cell is the data service, or consider that the fault service of the faulty cell is all services.

In a possible embodiment, a format of the fault information 1 may be: a use range + an identifier of the faulty cell + a fault type. The use range is used for indicating a fault service. For example, call: identifier of cell 1/stalling indicates that the cell 1 has a stalling fault for the call service. In another example, generic: identifier of cell 1/stalling indicates that the cell 1 has a service-independent stalling fault. In another example, Internet access: identifier of cell 1/NAS rejection indicates that the cell 1 has a NAS rejection fault for the Internet access service.

In this embodiment of this application, the AP may determine/predict, based on the position information of the terminal, cells on which the terminal may/can camp, and then determine, based on the fault map information 1, whether there is a faulty cell in the cells on which the terminal may/can camp. If yes, the fault information 1 is sent to the Modem. The fault information 1 indicates faulty cells in the cells on which the terminal may/can camp and indicates fault types and fault services of these faulty cells.

In a possible embodiment, in addition to being based on the position information of the terminal, the AP may further determine, with reference to a cell on which the terminal camps, a neighbour cell of the terminal, and a movement trajectory of the terminal, which cells the terminal may/can camp on.

In a possible embodiment, the AP may alternatively send the fault information 1 to the Modem independently of the position information of the terminal. For example, the fault information 1 may indicate all faulty cells, fault types of the cells, and fault services of the cells in the fault map information 1.

In a possible embodiment, the fault information 1 acquired by the AP may be determined independently of the fault map information 1. For example, the Modem may detect whether the serving cell has a service-specific fault. After detecting that the serving cell has the service-specific fault, the Modem may report a faulty cell, a fault service, and a fault type to the AP. The AP may record the faulty cell, the fault service, and the fault type, so as to subsequently determine the fault information 1 based on the position information of the terminal and the faulty cell, the fault service, and the fault type that are recorded by the AP. A processing unit for detecting, by the Modem, whether the serving cell has a service-specific fault may be different from a processing unit for verifying, by the Modem according to the fault information 1, whether the cell 1 has a stalling fault for the service 1.

304: The Modem verifies, according to the fault information 1, whether the cell 1 has a stalling fault for the service 1. After it is verified that the cell 1 does not have the stalling fault for the service 1, step 305 is performed. After it is verified that the cell 1 has the stalling fault for the service 1, step 306 is performed.

In this embodiment of this application, the Modem may perform step 304 when receiving the fault information 1, camping on the cell 1, and in the connected state.

Optionally, the Modem may verify, by detecting throughput of the cell 1 in the service 1, whether the cell 1 has a stalling fault for the service 1. The throughput refers to a rate of transmitting data in a communication network by using a communication channel. The throughput is typically measured in bits per second (bit/s or bps), and may alternatively be measured in packets per second (p/s or pps) or packets per time slot. For example, if the throughput of the cell 1 in the service 1 is less than a throughput threshold, the Modem considers that it is verified that the cell 1 has a stalling fault for the service 1. If the throughput of the cell 1 in the service 1 is greater than or equal to the throughput threshold, the Modem considers that it is not verified that the cell 1 has a stalling fault for the service 1. The Modem may alternatively verify, in another manner, whether the cell 1 has a stalling fault for the service 1. This is not limited in this embodiment of this application.

305: The Modem disregards the fault information 1.

In this embodiment of this application, "the Modem disregards the fault information 1" may mean that the Modem disregards that the cell 1 has the stalling fault for the service 1 indicated by the fault information 1, or the Modem does not reduce the RSRP of the cell 1 (specifically, when the Modem sends a measurement report, a first signal measurement result of the cell 1 carried in the measurement report may be a current actual signal measurement result of the cell 1). That is, the Modem may not perform a related escape operation on the cell 1, and the Modem may continue to camp on the cell 1. The escape operation in this embodiment of this application refers to a series of operations of causing the terminal to camp on another cell, such as step 307 to step 312.

306: The Modem reduces RSRP of the cell 1.

In this embodiment of this application, the RSRP may alternatively be replaced with RSRQ or another signal measurement result used for indicating cell signal quality. An example in which the signal measurement result is the RSRP is used in this embodiment of this application for description. The signal measurement result in this embodiment of this application refers to a value of the signal measurement result.

307: The Modem determines, based on the reduced RSRP of the cell 1, whether a measurement reporting condition is met. If the measurement reporting condition is met, step 308 is performed. If the measurement reporting condition is not met, step 311 is performed.

In this embodiment of this application, after reducing the RSRP of the cell 1, the Modem may determine, based on the reduced RSRP of the cell 1 and according to a provision of an existing standard, whether the measurement reporting condition is met. For example, if RSRP of the cell 2 is greater than the reduced RSRP of the cell 1, and a difference between the RSRP of the cell 2 and the reduced RSRP of the cell 1 is greater than a threshold, an event A3 is satisfied. The Modem sends a measurement report to an access network device corresponding to the cell 1. The measurement report may indicate that the event A3 is satisfied, and the measurement report carries the RSRP of the cell 2 and the reduced RSRP of the cell 1. After receiving the measurement report, the access network device corresponding to the cell 1 determines, based on content of the measurement report, whether to hand over the terminal to the cell 2 for camping.

308: The Modem sends a measurement report to an access network device corresponding to the cell 1. Correspondingly, the access network device corresponding to the cell 1 may receive the measurement report.

The measurement report carries the reduced RSRP of the cell 1, that is, the RSRP of the cell 1 carried in the measurement report is less than current actual RSRP of the cell 1.

309: After sending the measurement report, the Modem determines whether a message 1 sent by the access network device corresponding to the cell 1 is received within a time period. If the message 1 sent by the access network device corresponding to the cell 1 is received within the time period after the measurement report is sent, step 310 is performed. If the message 1 sent by the access network device corresponding to the cell 1 is not received within the time period after the measurement report is sent, step 311 is performed.

In this embodiment of this application, after sending the measurement report to the access network device corresponding to the cell 1, the Modem determines whether the message 1 sent by the access network device corresponding to the cell 1 is received within a time period. A starting moment of the time period may be the same as a sending moment of the measurement report. Alternatively, the starting moment of the time period may be before the sending moment of the measurement report, and a time interval between the starting moment of the time period and the sending moment of the measurement report is relatively small. Alternatively, the starting moment of the time period may be after the sending moment of the measurement report, and a time interval between the starting moment of the time period and the sending moment of the measurement report is relatively small. Alternatively, the starting moment of the time period may be a moment at which it is verified that the cell 1 has a stalling fault for the service 1.

310: The Modem performs handover from the cell 1 to a target cell for camping based on the message 1.

The message 1 carries information of the target cell, and the message 1 indicates the handover from the cell 1 to the target cell. Optionally, the message 1 may be an RRC connection reconfiguration message. For detailed introduction to cell handover, refer to the content of the third point of the introduction to the technical terms above. Details are not described herein.

311: The Modem determines whether the reduced RSRP of the cell 1 is less than or equal to a threshold 1. If the reduced RSRP of the cell 1 is greater than the threshold 1, return to step 306. That is, step 306 and subsequent steps are cyclically performed. If the reduced RSRP of the cell 1 is less than or equal to the threshold 1, step 312 is performed.

312: When the cell 1 has a neighbour cell, the Modem triggers an RLF procedure and selects the neighbour cell for camping.

In this embodiment of this application, when the Modem selects the neighbour cell for camping, RSRP of the neighbour cell is less than actual RSRP of the cell 1. That is, when the Modem triggers the RLF procedure, even if the RSRP of the neighbour cell is less than the actual RSRP of the cell 1, the neighbour cell is also selected for camping, and the cell 1 may not be selected for camping. In this way, the terminal can successfully escape from the cell 1 to another cell for camping. For detailed introduction to cell selection performed by the Modem, refer to the content of the fifth point of the introduction to the technical terms. Details are not described herein.

For example, after verifying that the cell 1 has a stalling fault for the service 1, the Modem reduces the RSRP of the cell 1 for the first time, to obtain RSRP1 of the cell 1. If determining, based on the RSRP1 of the cell 1, that the measurement reporting condition is met, the Modem sends a measurement report 1 to the access network device corresponding to the cell 1. The measurement report 1 carries the RSRP1 of the cell 1, and the RSRP1 of the cell 1 is less than the current actual RSRP of the cell 1. If the Modem receives the message 1 sent by the access network device corresponding to the cell 1 within a time period 1 after sending the measurement report 1, the Modem performs handover from the cell 1 to the target cell for camping based on the message 1.

If the Modem does not receive the message 1 sent by the access network device corresponding to the cell 1 within the time period 1 after sending the measurement report 1, the Modem determines whether the RSRP1 of the cell 1 is less than or equal to a threshold 1. If the RSRP1 of the cell 1 is less than or equal to the threshold 1, the RLF procedure is triggered when the cell 1 has a neighbour cell, and the neighbour cell is selected for camping. If the RSRP1 of the cell 1 is greater than the threshold 1, the RSRP of the cell 1 is reduced for the second time, to obtain RSRP2 of the cell 1. If determining, based on the RSRP2 of the cell 1, that the measurement reporting condition is met, the Modem sends a measurement report 2 to the access network device corresponding to the cell 1. The measurement report 2 carries the RSRP2 of the cell 1, the RSRP2 of the cell 1 is less than the current actual RSRP of the cell 1, and the RSRP2 of the cell 1 is less than the RSRP1 of the cell 1. If the Modem receives the message 1 sent by the access network device corresponding to the cell 1 within a time period 2 after sending the measurement report 2, the Modem performs handover from the cell 1 to the target cell for camping based on the message 1.

If the Modem does not receive the message 1 sent by the access network device corresponding to the cell 1 within the time period 2 after sending the measurement report 2, the Modem determines whether the RSRP2 of the cell 1 is less than or equal to the threshold 1. If the RSRP2 of the cell 1 is less than or equal to the threshold 1, the RLF procedure is triggered when the cell 1 has a neighbour cell, and the neighbour cell is selected for camping. If the RSRP2 of the cell 1 is greater than the threshold 1, the RSRP of the cell is reduced for the third time. The following operations are deduced by analogy, and details are not described again.

"The Modem reduces the RSRP of the cell 1" is described in detail below:
I. A reduction amount of the RSRP of the cell 1 is related to the service 1.

The signal measurement result of the cell 1 is reduced based on a fault service of the cell 1, so that different service requirements can be met more flexibly.

In a possible embodiment, the reduction amount of the RSRP of the cell 1 is related to a maximum reduction count corresponding to the cell 1, and the maximum reduction count corresponding to the cell 1 is related to the service 1. The maximum reduction count corresponding to the cell 1 is a maximum reduction count for reducing the RSRP of the cell 1.

Optionally, the Modem pre-stores a corresponding relationship between fault services and maximum reduction counts. Based on the corresponding relationship and the service 1, the Modem may determine the maximum reduction count corresponding to the cell 1. For example, the corresponding relationship may be shown in Table 4 below. If the service 1 is a call service, the maximum reduction count corresponding to the cell 1 is 1. If the service 1 is an Internet access service, the maximum reduction count corresponding to the cell 1 is 2.

**Table 4**

| Fault service | Maximum reduction count |
|---|---|
| Call | 1 |
| Internet access | 2 |

Optionally, when the service 1 is the call service, the maximum reduction count corresponding to the cell 1 is 1. When the service 1 is a service other than the call service, the maximum reduction count corresponding to the cell 1 is 2. The count 1 is less than the count 2. That is, a maximum reduction count corresponding to the call service is less than a maximum reduction count corresponding to another service. For example, the maximum reduction count corresponding to the call service is 1. The maximum reduction count corresponding to the Internet access service is 2.

If the cell 1 indeed experiences stalling in a call scenario, reducing the RSRP of the cell 1 multiple times may greatly affect call experience of the user due to stalling in a call of a user in a long period of time caused by impossible timely escape of the Modem to another cell for camping. Therefore, by making the maximum reduction count corresponding to the call service smaller, it is conducive to reducing a call stalling duration, thereby improving the call experience of the user.

The following describes two possible implementations of determining the reduction amount of the RSRP of the cell 1 based on the maximum reduction count corresponding to the cell 1:
1. Δ denotes a reduction amount each time the RSRP of the cell 1 is reduced. Δ= (*R*1 - *Rmax*)/*α*, where *R*1 denotes the actual RSRP of the cell 1 when the RSRP of the cell 1 is reduced for the first time, *Rmax* denotes the threshold 1, and *α* denotes the maximum reduction count corresponding to the cell 1.

The RSRP of the cell 1 is reduced for the first time based on actual RSRP of the cell 1 measured by the Modem. The RSRP of the cell 1 is reduced for the k^{th} time based on RSRP of the cell 1 that is reduced for the (k-1)^{th} time, where k is an integer greater than 1.

For example, if the service 1 is the call service, the maximum reduction count of the cell 1 is 1. The actual RSRP of the cell 1 measured by the Modem is -80 dbm. The threshold 1 is -128 dbm. The Modem may directly reduce the RSRP of the cell 1 from -80 dbm to -128 dbm, that is, the reduction amount is (-80-(-128))/1=48 dbm. If the measurement reporting condition is met after the RSRP of the cell 1 is reduced for the first time, the Modem sends the measurement report 1 to the cell 1. If the Modem does not receive the message 1 delivered by the cell 1 within a time period after sending the measurement report 1, since the reduced RSRP of the cell 1 is equal to the threshold 1, the Modem triggers the RLF procedure, so as to select a neighbour cell for camping.

If the service 1 is the Internet access service, the maximum reduction count of the cell 1 is 2. The Modem may reduce -80 dbm to -128 dbm in 2 steps. Each reduction amount is (-80-(-128))/2=24 dbm. The Modem may directly reduce the RSRP of the cell 1 from -80 dbm to -104 dbm for the first time, that is, the reduction amount is 24 dbm. If the measurement reporting condition is met after the RSRP of the cell 1 is reduced for the first time, the Modem sends the measurement report 1 to the cell 1. If the Modem does not receive the message 1 delivered by the cell 1 within the time period after sending the measurement report 1, since the reduced RSRP of the cell 1 is greater than the threshold 1, the Modem reduces the RSRP of the cell 1 from -104 dbm to -128 dbm for the second time, that is, the reduction amount is 24 dbm. If the measurement reporting condition is met after the RSRP of the cell 1 is reduced for the second time, the Modem sends the measurement report 2 to the cell 1. If the Modem does not receive the message 1 delivered by the cell 1 within a time period after sending the measurement report 2, since the reduced RSRP of the cell 1 is equal to the threshold 1, the Modem triggers the RLF procedure, so as to select a neighbour cell for camping.

2. Δ _{*} i denotes a reduction amount when the RSRP of the cell 1 is reduced for the i^{th} time, where i is an integer greater than 0. Δ= (*R*1 *- Rmax*)/*α*, where *R*1 denotes RSRP of the cell 1 actually measured when the RSRP of the cell 1 is reduced for the first time, *Rmax* denotes a first threshold, and *α* denotes the maximum reduction count corresponding to the cell 1.

Each time the RSRP of the cell 1 is reduced, the Modem reduces the actual RSRP of the cell 1.

For example, if the service 1 is the Internet access service and the stalling fault is stalling, the maximum reduction count of the cell 1 is 2. Each time the RSRP of the cell 1 is reduced, the Modem reduces the actual RSRP of the cell 1. An i^{th} reduction amount is i*(-80-(-128))/2=i*24 dbm, where i is greater than or equal to 1 and less than or equal to 2. For example, if the actual RSRP of the cell 1 measured by the Modem for the first time is -80 dbm, the Modem may reduce the RSRP of the cell 1 from -80 dbm to -104 dbm for the first time, with a reduction amount of 24 dbm. If the measurement reporting condition is met after the RSRP of the cell 1 is reduced for the first time, the Modem sends the measurement report 1 to the cell 1. If the Modem does not receive the message 1 delivered by the cell 1 within a time period after sending the measurement report 1, since the reduced RSRP of the cell 1 is greater than the threshold 1, the Modem measures the actual RSRP of the cell 1 for the second time. If the actual RSRP of the cell 1 measured by the Modem for the second time is -82 dbm, the Modem may reduce the RSRP of the cell 1 from -82 dbm to -130 dbm for the second time, with a reduction amount of 48 dbm. If the measurement reporting condition is met after the RSRP of the cell 1 is reduced for the second time, the Modem sends the measurement report 2 to the cell 1. If the Modem does not receive the message 1 delivered by the cell 1 within a time period after sending the measurement report 2, since the reduced RSRP of the cell 1 is less than the threshold 1, the Modem triggers the RLF procedure, so as to select a neighbour cell for camping.

If the RSRP after 2 reductions fails to reach -128 dbm, the actually measured RSRP of the cell 1 is directly reduced to -128 dbm during the 2 reductions of the RSRP of the cell 1. For example, if actual RSRP of the cell 1 measured by the Modem for the second time is -78 dbm, the RSRP of the cell 1 fails to reach -128 dbm after being reduced by 48 dbm (that is, -126 dbm). Therefore, the Modem directly reduces the RSRP of the cell 1 for the second time from -78 dbm to -128 dbm.

In another possible embodiment, Δ above may alternatively be determined independently of the maximum reduction count corresponding to the cell 1. For example, a corresponding relationship between fault services and Δ may be pre-stored in the Modem, and the Modem may determine Δ corresponding to the cell based on the corresponding relationship and the service 1. For example, the corresponding relationship between services and Δ may be shown in Table 5 below. The Modem may determine Δ corresponding to the service 1 based on a preset corresponding relationship between fault services and Δ. For example, assuming that the service 1 is a call service, Δ corresponding to the service 1 is 48 dbm.

**Table 5**

| Fault service | Δ |
|---|---|
| Call | 48 dbm |
| Internet access service | 24 dbm |

Optionally, when the service 1 is the call service, Δ corresponding to the cell 1 is a reduction amount 1. When the service 1 is a service other than the call service, Δ corresponding to the cell 1 is a reduction amount 2. The reduction amount 1 is greater than the reduction amount 2. That is, a reduction amount of RSRP corresponding to the call service is greater than a reduction amount of RSRP corresponding to another service. By making the reduction amount of the RSRP corresponding to the call service larger, if the cell 1 indeed experiences stalling in a call scenario, it is beneficial for the Modem to escape to another cell in time for camping, which reduces a call stalling duration, thereby improving call experience of the user.

II. The reduction amount of the RSRP of the cell 1 is unrelated to the service 1.

For example, Δ corresponding to all the cells are the same, and Δ denotes a preset fixed value.

In another example, the reduction amount of the RSRP of the cell 1 is determined based on the maximum reduction count corresponding to the cell 1, the maximum reduction count corresponding to the cell 1 is determined independently of the service 1, the maximum reduction counts corresponding to all the cells are the same, and the maximum reduction counts corresponding to all the cells are a preset fixed value. For how to determine the reduction amount of the RSRP of the cell 1 based on the maximum reduction count corresponding to the cell 1, refer to the foregoing descriptions. Details are not described herein.

313: The Modem does not report the RSRP of the cell 1 when current actual RSRP of the cell 1 meets the measurement reporting condition within a time period 4.

Step 313 is performed when the Modem receives the message 1. For example, a starting moment of the time period 4 is when the Modem receives the message 1, or the starting moment of the time period 4 is after the Modem receives the message 1.

Alternatively, step 313 is performed when the Modem determines that the reduced RSRP of the cell 1 is less than or equal to the threshold 1. For example, the starting moment of the time period 4 is when the Modem determines that the reduced RSRP of the cell 1 is less than or equal to the threshold 1, or the starting moment of the time period 4 is after the Modem determines that the reduced RSRP of the cell 1 is less than or equal to the threshold 1.

For example, the RSRP of the cell 1 may not be reported when current actual RSRP of the cell 1 meets the measurement reporting condition by reducing the RSRP of the cell 1 to a value less than or equal to a threshold 2. In another example, it may be stipulated that the RSRP of the cell 1 is not reported when the current actual RSRP of the cell 1 meets the measurement reporting condition, without reducing the RSRP of the cell 1. By not reporting the RSRP of the cell 1 when the current actual RSRP of the cell 1 meets the measurement reporting condition, an influence on the communication quality of the terminal caused by re-camping of the terminal on the faulty cell 1 when the terminal camps on another cell can be prevented.

314: The cloud server sends fault map information 2 to the AP. Correspondingly, the AP may receive the fault map information 2.

315: The AP sends fault information 2 to the Modem based on the position information of the terminal and the fault map information 2. Correspondingly, the Modem may receive the fault information 2.

In another possible embodiment, step 314 and step 315 may not be performed.

For example, the fault map information may not be updated, but the position information of the terminal is updated. Therefore, the AP may determine the fault information 2 based on current position information of the terminal and the fault map information 1 and send the fault information 2 to the Modem in the terminal.

In another example, the AP records a faulty cell, a fault service, and a fault type that are reported by the Modem. When the position information of the terminal is updated, the AP may determine the fault information 2 based on the position information of the terminal and a fault cell, a fault service, and a fault type that are recorded by the AP, and send the fault information 2 to the Modem in the terminal.

316: If the time period 4 expires or the fault information 2 does not indicate that the cell 1 has the stalling fault for the service 1, the Modem reports the RSRP of the cell 1 when the current actual RSRP of the cell 1 meets the measurement reporting condition.

In this embodiment of this application, if the Modem receives, within the time period 4, the fault information 2 indicating that the cell 1 has the stalling fault for the service 1, the Modem reports the RSRP of the cell 1 when the current actual RSRP of the cell 1 meets the measurement reporting condition. Alternatively, when the fault information 2 indicating that the cell 1 has a fault for the service 1 is not received, if the time period 4 expires, the Modem reports the RSRP of the cell 1 when the current actual RSRP of the cell 1 meets the measurement reporting condition.

In this embodiment of this application, when the time period 4 expires or the fault information 2 does not indicate that the cell 1 has a stalling fault for the service 1, the fault of the cell 1 may already be recovered. Therefore, if the time period 4 expires or the fault information 2 does not indicate that the cell 1 has the stalling fault for the service 1, the Modem reports the RSRP of the cell 1 when the current actual RSRP of the cell 1 meets the measurement reporting condition, which facilitates the Modem to re-camp on the cell 1 after fault recovery.

In a possible embodiment, the Modem may not select/reselect the cell 1 for camping when the current actual RSRP of the cell 1 meets a cell selection/reselection condition for selecting/reselecting the cell 1 for camping within the time period 4. If the time period 4 expires or the fault information 2 does not indicate that the cell 1 has the stalling fault for the service 1, the Modem selects/reselects the cell 1 for camping when the current actual RSRP of the cell 1 meets the cell selection/reselection condition.

For example, the cell 1 may not be selected/reselected for camping when the current actual RSRP of the cell 1 meets the cell selection/reselection condition for selecting/reselecting the cell 1 for camping by reducing the RSRP of the cell 1 to a value less than or equal to the threshold 2. In another example, it may be stipulated that the cell 1 is not selected/reselected for camping when the current actual RSRP of the cell 1 meets the cell selection/reselection condition for selecting the cell 1 for camping, without reducing the RSRP of the cell 1. By not selecting/reselecting the cell 1 for camping when the current actual RSRP of the cell 1 meets the cell selection/reselection condition for selecting/reselecting the cell 1 for camping, an influence on the communication quality of the terminal caused by re-camping of the terminal on the faulty cell 1 when the terminal camps on another cell can be prevented.

In a possible embodiment, the Modem may not perform step 311.

For example, the Modem reduces the RSRP of the cell 1 only once. For example, the Modem directly reduces the RSRP of the cell 1 to a preset value, or a reduction amount of the RSRP of the cell 1 is a preset value. If the Modem determines, based on the reduced RSRP of the cell 1, that the measurement reporting condition is not met, the Modem may directly perform step 312. If the Modem does not receive the message 1 sent by the cell 1, the Modem may directly perform step 312.

In a possible embodiment, the Modem may not perform step 311 and step 312.

In another example, if the Modem determines, based on the reduced RSRP of the cell 1, that the measurement reporting condition is not met, the Modem may return to step 306 to continue to reduce the RSRP of the cell 1. If the Modem does not receive the message 1 sent by the cell 1, the Modem returns to step 306 to continue to reduce the RSRP of the cell 1 until the message 1 is received.

In a possible embodiment, one or more of step 313 to step 316 may not be performed.

As can be seen, by implementing the method described in FIG. 3, the AP can indicate to the Modem that the cell 1 has a stalling fault for the service 1, and the Modem can verify whether the cell 1 has the stalling fault for the service 1 when the Modem camps on the cell 1 and is in the connected state, so as to ensure authenticity of the fault in the cell 1. When it is verified that the cell 1 has the stalling fault for the service 1, an escape operation is performed, so as to improve the communication quality. Otherwise, the escape operation is not performed, to prevent degradation of the communication quality of the terminal due to camping on a cell with worse signal quality than the current camping cell. The Modem can reduce the RSRP of the cell 1 multiple times, to prevent disregard of a measurement report due to consideration of erroneous measurement reporting by the access network device corresponding to the cell 1 caused by an excessive change in the RSRP of the cell 1. Moreover, when the reduced signal measurement result of the cell 1 is less than or equal to the threshold 1, if the message 1 has not been received yet, the terminal can autonomously trigger the RLF procedure, to select a neighbour cell for camping, enabling timely escape. In addition, when the Modem receives the message 1 or determines that the reduced RSRP of the cell 1 is less than or equal to the threshold 1, the RSRP of the cell 1 is not reported when the current actual RSRP of the cell 1 meets the measurement reporting condition, which helps to prevent an influence on the communication quality of the terminal caused by re-camping of the Modem on the faulty cell 1. Moreover, if the time period 4 expires or the fault information 2 does not indicate that the cell 1 has the stalling fault for the service 1, the Modem may report the RSRP of the cell 1 when the current actual RSRP of the cell 1 meets the measurement reporting condition, which facilitates the Modem to subsequently re-camp on the cell 1 after fault recovery.

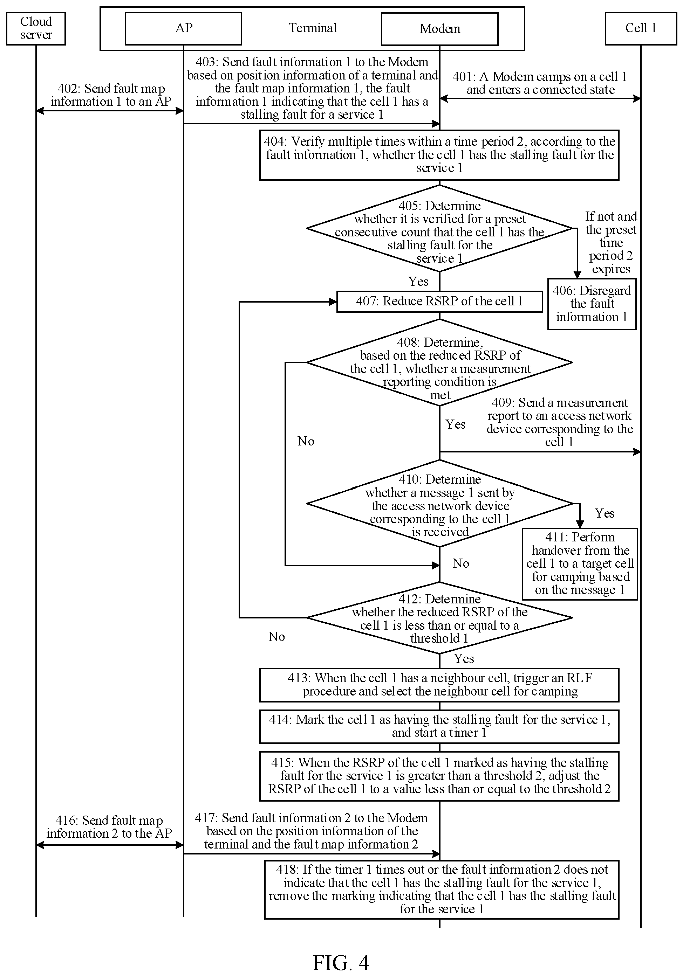

Referring to FIG. 4, FIG. 4 is a schematic flowchart of a cell fault processing method according to an embodiment of this application.

401: A Modem in a terminal camps on a cell 1, and enters a connected state.

402: A cloud server sends fault map information 1 to an AP in the terminal. Correspondingly, the AP may receive the fault map information 1.

403: The AP sends fault information 1 to the Modem in the terminal based on position information of the terminal and the fault map information 1, the fault information 1 indicating that the cell 1 has a stalling fault for a service 1. Correspondingly, the AP may receive the map information 1.

For specific implementations of step 401 to step 403, refer to the descriptions corresponding to step 301 to step 303. Details are not described herein.

404: The Modem verifies multiple times within a time period 2, according to the fault information 1, whether the cell 1 has the stalling fault for the service 1.

In this embodiment of this application, the Modem may perform step 404 when receiving the fault information 1, camping on the cell 1, and in the connected state.

405: The Modem determines whether it is verified for a preset consecutive count that the cell 1 has the stalling fault for the service 1. If it is not verified for a preset consecutive count that the cell 1 has the stalling fault for the service 1 when the time period 2 expires, step 406 is performed. If it is verified for a preset consecutive count within the time period 2 that the cell 1 has the stalling fault for the service 1, step 407 is performed.

In this embodiment of this application, if it is verified for a preset consecutive count within the time period 2 that the cell 1 has the stalling fault for the service 1, it proves that the cell 1 indeed has the stalling fault for the service 1. Therefore, step 407 and subsequent steps may be performed, so that the terminal escapes to another cell in time for camping, to prevent an influence on the communication quality of the terminal.

In this embodiment of this application, the time period 2 refers to a maximum verification duration of the Modem. The Modem may start to perform verification at a starting moment of the time period 2. If it is verified for a preset consecutive count within the time period 2 that the cell 1 has the stalling fault for the service 1, the verification may be stopped. If the Modem does not verify for a preset consecutive count within the time period 2 that the cell 1 has the stalling fault for the service 1 and the time period 2 has not expired yet, the verification may be continued. If it is not verified for a preset consecutive count within the time period 2 that the cell 1 has the stalling fault for the service 1 and the time period 2 expires, the Modem may stop the verification.

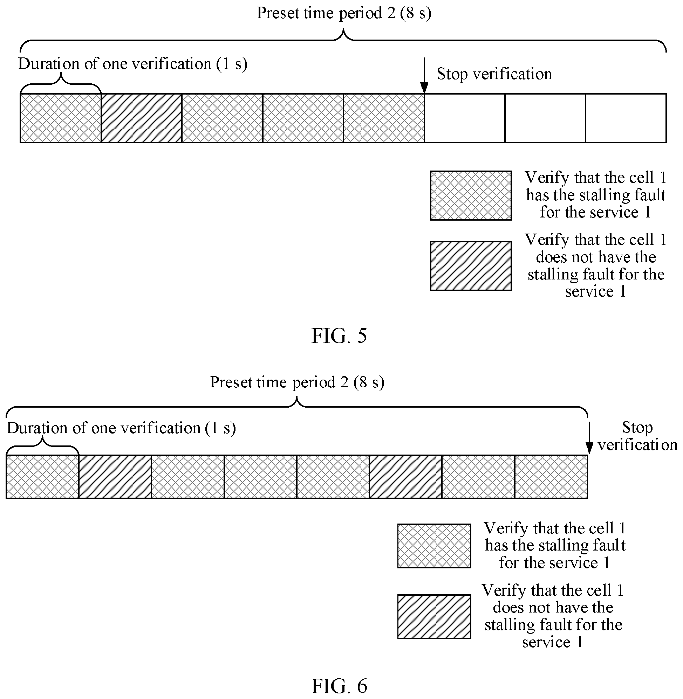

For example, as shown in FIG. 5, it is assumed that the time period 2 is 8 s (seconds) and a duration of one verification is 1 s. Therefore, a maximum of 8 verifications may be performed within the time period 2. It is assumed that the preset count is 3. It is verified in the first verification that the cell 1 has the stalling fault for the service 1. It is verified in the second verification that the cell 1 does not have the stalling fault for the service 1. It is verified in the third verification that the cell 1 has the stalling fault for the service 1. It is verified in the fourth verification that the cell 1 has the stalling fault for the service 1. It is verified in the fifth verification that the cell 1 has the stalling fault for the service 1. Since it is verified in the third verification, the fourth verification, and the fifth verification that the cell 1 has the stalling fault for the service 1, that is, it is verified consecutively 3 times that the cell 1 has the stalling fault for the service 1, the Modem stops the verification and reduces the RSRP of the cell 1, so as to escape to another cell in time for camping.

In a possible embodiment, the duration of the time period 2 is related to the service 1. That is, the duration of the time period 2 is flexible, and by making the duration of the time period 2 related to a fault service, different service requirements can be met more flexibly.

For example, the Modem pre-stores a corresponding relationship between fault services and durations of the time period 2, and the Modem may determine the duration of the time period 2 based on the corresponding relationship and the service 1. For example, the corresponding relationship may be shown in Table 6 below. If the service 1 is a call service, the duration of the time period 2 is 8 s. If the service 1 is an Internet access service, the duration of the time period 2 is 16 s.

**Table 6**

| Fault service | Duration of time period 2 |
|---|---|
| Call | 8 s |
| Internet access service | 16 s |

In a possible embodiment, when the service 1 is the call service, the duration of the time period 2 is a duration 1. When the service 1 is a service other than the call service, the duration of the time period 2 is a duration 2. The duration 1 is less than the duration 2. That is, a maximum verification duration corresponding to the call service is less than a maximum verification duration corresponding to another service. Refer to FIG. 6, for example.

If the cell 1 indeed experiences stalling in a call scenario, long-time verification on whether the cell 1 experiences stalling in the call scenario may greatly affect call experience of the user due to stalling in a call of the user in a long period of time caused by impossible timely escape of the Modem to another cell for camping. Therefore, by making the maximum verification duration corresponding to the call service shorter, it is conducive to reducing a call stalling duration, thereby improving the call experience of the user.

In another possible embodiment, the duration of the time period 2 may alternatively be unrelated to the service 1. For example, the duration of the time period 2 may be a fixed value.

406: The Modem disregards the fault information 1.

407: The Modem reduces RSRP of the cell 1.

408: The Modem determines, based on the reduced RSRP of the cell 1, whether a measurement reporting condition is met. If the measurement reporting condition is met, step 409 is performed. If the measurement reporting condition is not met, step 412 is performed.

409: The Modem sends a measurement report to an access network device corresponding to the cell 1.

410: After sending the measurement report, the Modem determines whether a message 1 sent by the access network device corresponding to the cell 1 is received within a time period. If the message 1 sent by the access network device corresponding to the cell 1 is received within the time period after the measurement report is sent, step 411 is performed. If the message 1 sent by the access network device corresponding to the cell 1 is not received within the time period after the measurement report is sent, step 412 is performed.

411: The Modem performs handover from the cell 1 to a target cell for camping based on the message 1.

412: The Modem determines whether the reduced RSRP of the cell 1 is less than or equal to a threshold 1. If the reduced RSRP of the cell 1 is greater than the threshold 1, return to step 407. That is, step 407 and subsequent steps are cyclically performed. If the reduced RSRP of the cell 1 is less than or equal to the threshold 1, step 413 is performed.

413: When the cell 1 has a neighbour cell, the Modem triggers an RLF procedure and selects the neighbour cell for camping.

For specific implementations of step 406 to step 413, refer to the descriptions corresponding to step 305 to step 312. Details are not described herein.

414: The Modem marks the cell 1 as having the stalling fault for the service 1, and starts a timer 1.

In this embodiment of this application, the Modem may mark the cell 1 as having the stalling fault for the service 1 after verifying that the cell 1 indeed has the stalling fault for the service 1.

For example, after verifying that the cell 1 indeed has the stalling fault for the service 1, the Modem may mark the cell 1 as having the stalling fault for the service 1 before receiving the message 1 sent by the access network device corresponding to the cell 1. Alternatively, the Modem may perform step 414 when receiving the message 1 sent by the access network device corresponding to the cell 1.

In another example, after verifying that the cell 1 indeed has the stalling fault for the service 1, the Modem may mark the cell 1 as having the stalling fault for the service 1 before determining that the reduced RSRP of the cell 1 is less than or equal to the threshold 1. Alternatively, the Modem may perform step 414 when determining that the reduced RSRP of the cell 1 is less than or equal to the threshold 1.

In a possible embodiment, the Modem starts the timer 1 when marking the cell 1 as having the stalling fault for the service 1. Alternatively, the Modem starts the timer 1 after marking the cell 1 as having the stalling fault for the service 1, and a time interval between a moment at which the Modem marks the cell 1 as having the stalling fault for the service 1 and a moment at which the timer 1 is started is relatively small. Alternatively, the Modem starts the timer 1 before marking the cell 1 as having the stalling fault for the service 1, and a time interval between a moment at which the Modem marks the cell 1 as having the stalling fault for the service 1 and a moment at which the timer 1 is started is relatively small.

In a possible embodiment, after receiving the fault information 1, the Modem may add a faulty cell, a fault service, and a fault type that are indicated by the fault information 1 to a faulty cell information list 1 for storage.

In a possible embodiment, there are the following two specific implementations in which the Modem marks the cell 1 as having the stalling fault for the service 1:
I. The Modem adds the cell 1, the service 1, and the stalling fault to a faulty cell information list 2. The faulty cell information list 2 includes verified faulty cells along with fault services and fault types thereof.

For example, the faulty cell information list 2 is shown in Table 7 below. Table 7 below indicates that it has been verified that the cell 1 has a stalling fault for a call service and the cell 3 has a stalling fault for an Internet access service.

**Table 7**

| Cell identifier | Fault service | Fault type |
|---|---|---|
| Identifier of cell 1 | Call | Stalling |
| Identifier of cell 3 | Internet access | Stalling |

II. The faulty cell information list 1 has marking information, and the marking information is used for indicating whether it has been verified that the cell 1 has a stalling fault for the service 1. A specific implementation in which the Modem marks the cell 1 as having the stalling fault for the service 1 may be: modifying values of the marking information corresponding to the cell 1, the service 1, and the stalling fault for the faulty cell information list 1 to values used for indicating whether it has been verified that the cell 1 has the stalling fault for the service 1. For example, the value of the marking information is 11, indicating that it has been verified that the cell 1 has the stalling fault for the service 1. The value of the marking information is 00, indicating that it is to be verified whether the cell 1 has the stalling fault for the service 1. Therefore, when marking the cell 1 as having the stalling fault for the service 1, the Modem may modify the values of the marking information corresponding to the cell 1, the service 1, and the stalling fault for the faulty cell information list 1 from 00 to 11.

For example, the faulty cell information list 1 may be shown in Table 8 below. Values of marking information corresponding to the cell 1, the call service, and stalling are 11, indicating that it has been verified that the cell 1 has a stalling fault for the call service. Values of marking information corresponding to the cell 2, the Internet access service, and stalling are 00, indicating that it is to be verified whether the cell 2 has a stalling fault for the Internet access service. Values of marking information corresponding to the cell 3, the call service, and NAS injection are 11, indicating that it has been verified that the cell 3 has a stalling fault for the call service.

**Table 8**

| Cell identifier | Fault service | Fault type | Marking information |
|---|---|---|---|
| Identifier of cell 1 | Call | Stalling | 11 |
| Identifier of cell 2 | Internet access | Stalling | 00 |
| Identifier of cell 3 | Call | Stalling | 11 |

In this embodiment of this application, a cell in a marked state may not be re-marked.

415: When the RSRP of the cell 1 marked as having the stalling fault for the service 1 is greater than a threshold 2, the Modem adjusts the RSRP of the cell 1 marked as having the stalling fault for the service 1 to a value less than or equal to the threshold 2.

In this embodiment of this application, the Modem may perform step 415 when receiving the message 1. Alternatively, the Modem may perform step 415 when the signal measurement result of the cell 1 is less than or equal to the threshold 1.

The Modem may always measure RSRP of a cell, so as to camp on a suitable cell. When the RSRP of the cell 1 marked as having the stalling fault for the service 1 is greater than the threshold 2, it indicates that the cell 1 has better signal quality, which may cause the Modem to perform handover to/select/reselect the cell 1 for camping, thereby affecting the communication quality of the terminal. Therefore, in this embodiment of this application, if the RSRP of the cell 1 marked as having the stalling fault for the service 1 is greater than the threshold 2, the RSRP of the cell 1 may be reduced to a value less than or equal to the threshold 2, to prevent handover to/selection/reselection of the cell 1 marked as having the stalling fault for the service 1 for camping.

In this embodiment of this application, the cell 1 is marked as having the stalling fault for the service 1, and when the RSRP of the cell 1 marked as having the stalling fault for the service 1 is greater than the threshold 2, the RSRP of the cell 1 marked as having the stalling fault for the service 1 is adjusted to a value less than or equal to the threshold 2. In this way, the RSRP of the cell 1 may not be reported when current actual RSRP of the cell 1 meets the measurement reporting condition. In addition, the cell 1 may not be selected/reselected for camping when the current actual RSRP of the cell 1 meets the cell selection/reselection condition for selecting/reselecting the cell 1 for camping.

In a possible embodiment, the threshold 2 may be the same as or different from the threshold 1.

Optionally, the threshold 2 corresponding to the cell 1 may be greater than or equal to an access threshold corresponding to the cell 1. By making the threshold 2 corresponding to the cell 1 greater than the access threshold corresponding to the cell 1, when there is no accessible fault-free neighbour cell around the serving cell, the cell 1 marked as having a stalling fault for the service 1 may also be selected for camping.

Optionally, the threshold 1 corresponding to the cell 1 may be less than the access threshold corresponding to the cell 1. By making the threshold 1 corresponding to the cell 1 less than the access threshold corresponding to the cell 1, the RSRP of the cell 1 can be maximally reduced to a value below the access threshold of the cell 1. In this way, it is easier for the Modem to perform handover to another cell for camping.

416: The cloud server sends fault map information 2 to the AP in the terminal. Correspondingly, the AP may receive the fault map information 2.

417: The AP sends fault information 2 to the Modem in the terminal based on the position information of the terminal and the fault map information 2, the fault information 2 indicating a faulty cell, a fault service of the cell, and a fault type of the cell. Correspondingly, the Modem may receive the fault information 2.

For specific implementations of step 416 and step 417, refer to the descriptions corresponding to step 314 to step 315. Details are not described herein.

418: If the timer 1 times out or the fault information 2 does not indicate that the cell 1 has the stalling fault for the service 1, the Modem removes the marking indicating that the cell 1 has the stalling fault for the service 1.

In this embodiment of this application, when the timer 1 does not time out, if the fault information 2 not indicating that the cell 1 has the stalling fault for the service 1 is received, the Modem removes the marking indicating that the cell 1 has the stalling fault for the service 1. Alternatively, when an indication that the cell 1 has the stalling fault for the service 1 is not received, if the timer 1 times out, the Modem removes the marking indicating that the cell 1 has the stalling fault for the service 1.

In a possible embodiment, the Modem may further update content in the faulty cell information list 1 based on the fault information 2, so as to subsequently determine a cell on which fault verification needs to be performed.

For example, it is assumed that the faulty cell information list 1 is shown in Table 1, and the fault information 2 indicates that the cell 3 has a stalling fault for the call service and the cell 4 has a stalling problem with the Internet access service. Then, the Modem may update the faulty cell information list 1 as shown in Table 9.

It is assumed that the Modem marks the cell 1 as having the stalling fault for the service 1 by adding the cell 1, the service 1, and the stalling fault to the faulty cell information list 2. It is assumed that the faulty cell information list 2 (that is, a cell that has been marked with a fault) is shown in Table 7. Since the fault information 2 does not indicate that the cell 1 has the stalling fault for the call service, the Modem may remove the first row of Table 7 from Table 7. After removing the first row of Table 7 from Table 7, subsequently, the Modem may not need to adjust the RSRP of the cell 1 and may perform handover to/select/reselect the cell 1 for camping if the RSRP of the cell 1 is greater than the threshold 2.

**Table 9**

| Cell identifier | Fault service | Fault type |
|---|---|---|
| Identifier of cell 4 | Internet access | Stalling |
| Identifier of cell 3 | Call | Stalling |

In another example, it is assumed that the Modem marks, by using the marking information in the faulty cell information list 1, the cell 1 as having the stalling fault for the service 1. It is assumed that the faulty cell information list 1 is shown in Table 8, and the fault information 2 indicates that the cell 3 has a stalling fault for the call service and the cell 4 has a stalling fault for the Internet access service. Then, the Modem may update the faulty cell information list 1 as shown in Table 10.

**Table 10**

| Cell identifier | Fault service | Fault type | Marking information |
|---|---|---|---|
| Identifier of cell 4 | Internet access | Stalling | 00 |
| Identifier of cell 3 | Call | Stalling | 11 |

In a possible embodiment, step 405 may alternatively be replaced with: determining whether a ratio 1 is greater than a preset ratio, the ratio 1 being a ratio of a count of verifications for the cell 1 having the stalling fault for the service 1 within the time period 2 to a total verification count within the time period 2.

If the ratio 1 is greater than the preset ratio, it proves that the cell 1 indeed has the stalling fault for the service 1. Therefore, step 407 and subsequent steps may be performed, so that the terminal escapes to another cell in time for camping, to prevent an influence on the communication quality of the terminal.

If the ratio 1 is less than or equal to the preset ratio, it proves that the cell 1 does not have the stalling fault for the service 1. Therefore, the Modem may perform step 406.

For example, as shown in FIG. 6, it is assumed that the time period 2 is 8 s (seconds) and a duration of one verification is 1 s. Therefore, 8 verifications may be performed within the time period 2. It is verified in the first verification that the cell 1 has the stalling fault for the service 1. It is verified in the second verification that the cell 1 does not have the stalling fault for the service 1. It is verified in the third verification that the cell 1 has the stalling fault for the service 1. It is verified in the fourth verification that the cell 1 has the stalling fault for the service 1. It is verified in the fifth verification that the cell 1 has the stalling fault for the service 1. It is verified in the sixth verification that the cell 1 does not have the stalling fault for the service 1. It is verified in the seventh verification that the cell 1 has the stalling fault for the service 1. It is verified in the eighth verification that the cell 1 has the stalling fault for the service 1. Therefore, the ratio 1 is 3/4. Assuming that the preset ratio is 1/2, the ratio 1 is greater than the preset ratio, and it proves that the cell 1 has the stalling fault for the service 1. Therefore, the Modem reduces the RSRP of the cell 1 to enable timely escape to another cell for camping.

In a possible embodiment, the Modem may not perform step 412.

For example, the Modem reduces the RSRP of the cell 1 only once. For example, the Modem directly reduces the RSRP of the cell 1 to a preset value, or a reduction amount of the RSRP of the cell 1 is a preset value. If the Modem determines, based on the reduced RSRP of the cell 1, that the measurement reporting condition is not met, the Modem may directly perform step 413. If the Modem does not receive the message 1 sent by the cell 1, the Modem may directly perform step 413.

In a possible embodiment, the Modem may not perform step 412 and step 413.

In another example, if the Modem determines, based on the reduced RSRP of the cell 1, that the measurement reporting condition is not met, the Modem may return to step 407 to continue to reduce the RSRP of the cell 1. If the Modem does not receive the message 1 sent by the cell 1, the Modem returns to step 407 to continue to reduce the RSRP of the cell 1 until the message 1 is received.

In a possible embodiment, one or more of step 414 to step 418 may not be performed.

In a possible embodiment, step 414 to step 418 may alternatively be replaced with step 313 to step 316.

As can be seen, by implementing the method described in FIG. 4, the Modem may perform fault verification on the cell 1 multiple times, which helps to improve accuracy of the fault verification. In addition, the Modem may mark the cell 1 as having the stalling fault for the service 1 when confirming that the cell 1 indeed has the stalling fault for the service 1. The Modem adjusts the RSRP of the cell 1 to the threshold 2 when the RSRP of the cell 1 marked as having the stalling fault for the service 1 exceeds the threshold 2, which helps to prevent the Modem's handover to/selection/reselection of the cell 1 marked as having the stalling fault for the service 1 for camping. Moreover, the Modem may further start the timer when marking the cell 1 with the stalling fault for the service 1. When the timer times out or the fault information 2 not indicating that the cell 1 has the stalling fault for the service 1 is received, the marking indicating that the cell 1 has the stalling fault for the service 1 may be removed, so that the Modem can subsequently re-camp to the cell 1 after fault recovery.

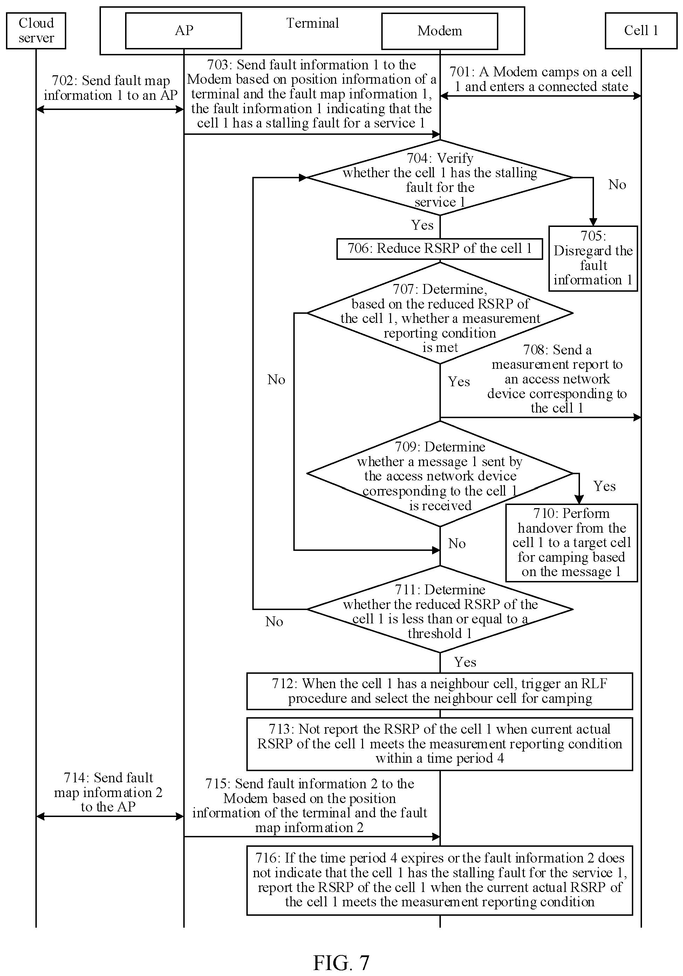

Referring to FIG. 7, FIG. 7 is a schematic flowchart of a cell fault processing method according to an embodiment of this application.

701: A Modem in a terminal camps on a cell 1, and enters a connected state.

702: A cloud server sends fault map information 1 to an AP in the terminal. Correspondingly, the AP may receive the fault map information 1.

703: The AP sends fault information 1 to the Modem in the terminal based on position information of the terminal and the fault map information 1, the fault information 1 indicating that the cell 1 has a stalling fault for a service 1. Correspondingly, the Modem may receive the fault information 1.

704: The Modem verifies whether the cell 1 has the stalling fault for the service 1. If it is verified that the cell 1 does not have the stalling fault for the service 1, step 705 is performed. If it is verified that the cell 1 has the stalling fault for the service 1, step 706 is performed.

705: The Modem disregards the fault information 1.

706: The Modem reduces RSRP of the cell 1.

707: The Modem determines, based on the reduced RSRP of the cell 1, whether a measurement reporting condition is met. If the measurement reporting condition is met, step 708 is performed. If the measurement reporting condition is not met, step 711 is performed.

708: The Modem sends a measurement report to an access network device corresponding to the cell 1.

709: After sending the measurement report, the Modem determines whether a message 1 sent by the access network device corresponding to the cell 1 is received within a time period. If the message 1 sent by the access network device corresponding to the cell 1 is received within the time period after the measurement report is sent, step 710 is performed. If the message 1 sent by the access network device corresponding to the cell 1 is not received within the time period after the measurement report is sent, step 711 is performed.

710: The Modem performs handover from the cell 1 to a target cell for camping based on the message 1.

The first message indicates the handover from the cell 1 to the target cell.

711: The Modem determines whether the reduced RSRP of the cell 1 is less than or equal to a threshold 1. If the reduced RSRP of the cell 1 is greater than the threshold 1, return to step 704. That is, step 704 and subsequent steps are cyclically performed. If the reduced RSRP of the cell 1 is less than or equal to the threshold 1, step 712 is performed.

712: When the cell 1 has a neighbour cell, the Modem triggers an RLF procedure and selects the neighbour cell for camping.

For specific implementations of step 701 to step 712, refer to the descriptions corresponding to step 301 to step 312. Details are not described herein. A difference between step 711 and step 311 lies in that, for step 311, if it is determined that the reduced RSRP of the cell 1 is less than or equal to the threshold 1, return to step 306 to continue to reduce the RSRP of the cell 1. For step 711, if it is determined that the reduced RSRP of the cell 1 is less than or equal to the threshold 1, return to step 704 to continue to verify whether the cell 1 has a stalling fault for the service 1.

In a possible embodiment, a maximum fault verification count corresponding to the cell 1 is related to the service 1. By determining the maximum fault verification count corresponding to the cell by using the fault service of the cell, different service requirements can be met more flexibly.

For example, if a verification count for verifying whether the cell 1 has the stalling fault for the service 1 is less than the maximum fault verification count corresponding to the cell 1, it is verified whether the cell 1 has the stalling fault for the service 1. Otherwise, it is not verified whether the cell 1 has the stalling fault for the service 1, and step 706 may be directly performed.

Optionally, the Modem may preset a corresponding relationship between fault services and maximum fault verification counts. Based on the corresponding relationship between the service 1 and the maximum fault verification count, the Modem may determine the maximum fault verification count corresponding to the cell 1. For example, the corresponding relationship may be shown in Table 11 below. If the service 1 is a call service, the maximum fault verification count corresponding to the cell 1 is 1. If the service 1 is an Internet access service, the maximum fault verification count corresponding to the cell 1 is 2.

**Table 11**

| Fault service | Maximum fault verification count |
|---|---|
| Call | 1 |
| Internet access service | 2 |

In a possible embodiment, when the service 1 is the call service, the maximum fault verification count corresponding to the cell 1 is 1. When the service 1 is a service other than the call service, the maximum fault verification count corresponding to the cell 1 is 2. The count 1 is less than the count 2. That is, a maximum fault verification count corresponding to the call service is less than a maximum fault verification count corresponding to another service. For example, the maximum fault verification count corresponding to the call service is 1. The maximum fault verification count corresponding to the Internet access service is 2.

If the cell 1 indeed experiences stalling in a call scenario, multiple verifications on whether the cell 1 experiences stalling in the call scenario may greatly affect call experience of the user due to stalling in a call of the user in a long period of time caused by impossible timely escape of the Modem to another cell for camping. Therefore, by making the maximum fault verification count corresponding to the call service smaller, it is conducive to reducing a call stalling duration, thereby improving the call experience of the user.

In a possible embodiment, the maximum fault verification count corresponding to the cell 1 is equal to the maximum reduction count corresponding to the cell 1 and used for reducing RSRP.

713: The Modem does not report the RSRP of the cell 1 when current actual RSRP of the cell 1 meets the measurement reporting condition within a time period 4.

714: The cloud server sends fault map information 2 to the AP. Correspondingly, the AP may receive the fault map information 2.

715: The AP sends fault information 2 to the Modem based on the position information of the terminal and the fault map information 2. Correspondingly, the Modem may receive the fault information 2.

716: If the time period 4 expires or the fault information 2 does not indicate that the cell 1 has a stalling fault for the service 1, the Modem reports the RSRP of the cell 1 when the current actual RSRP of the cell 1 meets the measurement reporting condition.

For specific implementations of step 713 to step 716, refer to the descriptions corresponding to step 313 to step 316. Details are not described herein.

In a possible embodiment, step 713 to step 716 may alternatively be replaced with step 414 to step 418.

As can be seen, by implementing the method described in FIG. 7, the Modem may perform fault verification on the cell 1 multiple times, which helps to improve accuracy of the fault verification.

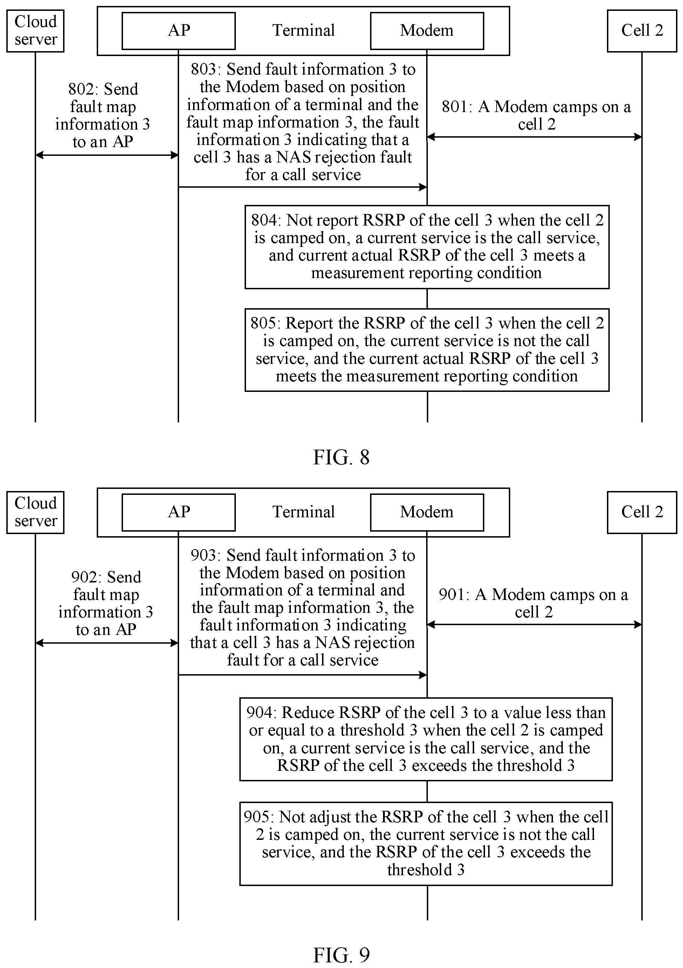

Referring to FIG. 8, FIG. 8 is a schematic flowchart of a cell fault processing method according to an embodiment of this application.

801: A Modem in a terminal camps on a cell 2.

In this embodiment of this application, step 801 is performed before step 804 and step 805. For example, step 801 is performed before step 802. In another example, step 801 may be performed after step 802 and before step 803. In another example, step 801 may be performed after step 803 and before step 804 and step 805. Alternatively, step 801 may be performed simultaneously with step 802 or step 803. This is not limited in this embodiment of this application.

That is, the Modem may first camp on the cell 2, receive fault information 3 sent by an AP, and then perform step 804 and step 805. Alternatively, the Modem may first receive the fault information 3 sent by the AP, camp on the cell 2, and then perform step 804 and step 805.

802: A cloud server sends fault map information 3 to an AP in the terminal. Correspondingly, the AP may receive the fault map information 3.

803: The AP sends fault information 3 to the Modem in the terminal based on position information of the terminal and the fault map information 3, the fault information 3 indicating that a cell 3 has a NAS rejection fault for a call service. Correspondingly, the Modem may receive the fault information 3.

For specific implementations of step 802 and step 803, refer to the descriptions corresponding to step 302 and step 303. Details are not described herein.

804: The Modem does not report RSRP of the cell 3 when the cell 2 is camped on, a current service is the call service, and current actual RSRP of the cell 3 meets a measurement reporting condition.

805: The Modem reports the RSRP of the cell 3 when the cell 2 is camped on, the current service is not the call service, and the current actual RSRP of the cell 3 meets the measurement reporting condition.

If the cell 3 has a NAS rejection fault for the call service, the call may be interrupted due to camping of the Modem on the cell 3 during a call. The RSRP of the cell 3 is reported when the current actual RSRP of the cell 3 meets the measurement reporting condition, and the network side may notify the terminal to perform handover to the cell 3 for camping. Therefore, in this embodiment of this application, the Modem does not report RSRP of the cell 3 when the cell 2 is camped on, the current service is the call service, and current actual RSRP of the cell 3 meets the measurement reporting condition, which helps to prevent an influence on user experience due to call interruption caused by handover of the Modem to the cell 3 for camping during execution of the call service.

For example, the RSRP of the cell 1 may not be reported when the current actual RSRP of the cell 1 meets the measurement reporting condition by reducing the RSRP of the cell 1. In another example, it may be stipulated that the RSRP of the cell 1 is not reported when the current actual RSRP of the cell 1 meets the measurement reporting condition, without reducing the RSRP of the cell 1.

In a possible embodiment, the Modem may not select/reselect the cell 1 for camping when the cell 2 is camped on, the current service is the call service, and the current actual RSRP of the cell 1 meets a cell selection/reselection condition for selecting/reselecting the cell 1 for camping. Alternatively, the Modem may select/reselect the cell 1 for camping when the cell 2 is camped on, the current service is not the call service, and the current actual RSRP of the cell 1 meets the cell selection/reselection condition for selecting/reselecting the cell 1 for camping.

For example, the cell 1 is not selected/reselected for camping when the current actual RSRP of the cell 1 meets the cell selection/reselection condition for selecting/reselecting the cell 1 for camping by reducing the RSRP of the cell 1. In another example, it may be stipulated that the cell 1 is not selected/reselected for camping when the current actual RSRP of the cell 1 meets the cell selection/reselection condition for selecting/reselecting the cell 1 for camping, without reducing the RSRP of the cell 1.

As can be seen, by implementing the method described in FIG. 8, it is conducive to preventing an influence on user experience due to interruption of a call caused by handover of the terminal to the cell 3 that has a NAS rejection fault for the call service for camping during execution of the call service. It may be understood that, if the fault information 3 indicates that the cell 3 has a NAS rejection fault for the call service, the terminal may not verify, according to the fault information 3, whether the cell has 3 the NAS rejection fault for the call service (specifically, the terminal may not camp on the cell 3, and then may not verify whether the cell 3 has the NAS rejection fault for the call service. Apparently, in a possible case, a module in the terminal may not provide a verification result of whether the cell 3 has the NAS rejection fault for the call service), but directly determine, according to the fault information 3, that the cell 3 has the NAS rejection fault for the call service. In addition, based on this, if the current service is the call service, measures are taken (for example, a signal measurement result of the cell 3 is not reported), to prevent interruption of a current call caused by handover of the terminal to the cell 3 for camping. If the current service is not the call service, even if the terminal is handed over to the cell 3 for camping, the current service may not be affected. Therefore, no measures may be taken to prevent the handover of the terminal to the cell 3 for camping.

Referring to FIG. 9, FIG. 9 is a schematic flowchart of a cell fault processing method according to an embodiment of this application.

901: A Modem in a terminal camps on a cell 2.

In this embodiment of this application, step 901 is performed before step 904 and step 905. For example, step 901 is performed before step 902. In another example, step 901 may be performed after step 902 and before step 903. In another example, step 901 may be performed after step 903 and before step 904 and step 905. Alternatively, step 901 may be performed simultaneously with step 902 or step 903. This is not limited in this embodiment of this application.

That is, the Modem may first camp on the cell 2, receive fault information 3 sent by an AP, and then perform step 904 and step 905. Alternatively, the Modem may first receive the fault information 3 sent by the AP, camp on the cell 2, and then perform step 904 and step 905.

902: A cloud server sends fault map information 3 to an AP in the terminal. Correspondingly, the AP may receive the fault map information 3.

903: The AP sends fault information 3 to the Modem in the terminal based on position information of the terminal and the fault map information 3, the fault information 3 indicating that a cell 3 has a NAS rejection fault for a call service. Correspondingly, the Modem may receive the fault information 3.

For specific implementations of step 902 and step 903, refer to the descriptions corresponding to step 302 and step 303. Details are not described herein.

904: The Modem reduces RSRP of the cell 3 to a value less than or equal to a threshold 3 when the cell 2 is camped on, a current service is the call service, and the RSRP of the cell 3 exceeds the threshold 3.

Generally, the terminal is in a connected state when executing the call service. However, in some special cases, the terminal is in an idle state when executing the call service. For example, an RLF occurs when the terminal executes the call service, causing the terminal to perform cell selection and enter the idle state. Therefore, step 904 may be performed when the Modem camps on the cell 2 and is in the connected state or the idle state.

The Modem may always measure RSRP of a cell, so as to camp on a suitable cell. When the RSRP of the cell 3 is greater than the threshold 3, it indicates that signal strength of the cell 3 is higher, and the Modem may camp on the cell 3. If the cell 3 has a NAS rejection fault for the call service, the call may be interrupted due to camping of the Modem on the cell 3 during a call. When fault information 1 indicates that the cell 3 has the NAS rejection fault for the call service, there is a high possibility that the cell 3 indeed has the NAS rejection fault for the call service. Therefore, to prevent call interruption, when a current service of the cell 3 is a call service and RSRP of the cell 3 is greater than the threshold 3, the Modem reduces the RSRP of the cell 3 to the threshold 3, so that the RSRP of the cell 3 remains at a lower value. In this way, it is conducive to preventing an influence on user experience due to interruption of a call caused by the Modem's handover to/selection/reselection of the cell 3 for camping during execution of the call service.

Optionally, the threshold 3 may be less than the foregoing threshold 2.

In this embodiment of this application, the RSRP of the cell 3 is reduced to a value less than or equal to the threshold 3 when the cell 2 is camped on, the current service is the call service, and the RSRP of the cell 3 exceeds the threshold 3. In this way, the RSRP of the cell 3 is not reported when the cell 2 is camped on, the current service is the call service, and current actual RSRP of the cell 3 meets a measurement reporting condition. Alternatively, the cell 1 may not be selected/reselected for camping when the cell 2 is camped on, the current service is the call service, and the current actual RSRP of the cell 1 meets a cell selection/reselection condition for selecting/reselecting the cell 1 for camping.

905: The Modem does not adjust the RSRP of the cell 3 when the cell 2 is camped on, the current service is not the call service, and the RSRP of the cell 3 exceeds the threshold 3.

In this embodiment of this application, the RSRP of the cell 3 is not adjusted when the cell 2 is camped on, the current service is not the call service, and the RSRP of the cell 3 exceeds the threshold 3. In this way, the RSRP of the cell 3 is reported when the cell 2 is camped on, the current service is not the call service, and the current actual RSRP of the cell 3 meets the measurement reporting condition. Alternatively, the cell 1 may be selected/reselected for camping when the cell 2 is camped on, the current service is not the call service, and the current actual RSRP of the cell 1 meets the cell selection/reselection condition for selecting/reselecting the cell 1 for camping.

By implementing the method described in FIG. 9, it is conducive to preventing an influence on user experience due to interruption of a call caused by the Modem's handover to/selection/reselection of the cell 3 that has a NAS rejection fault for the call service for camping during execution of the call service.

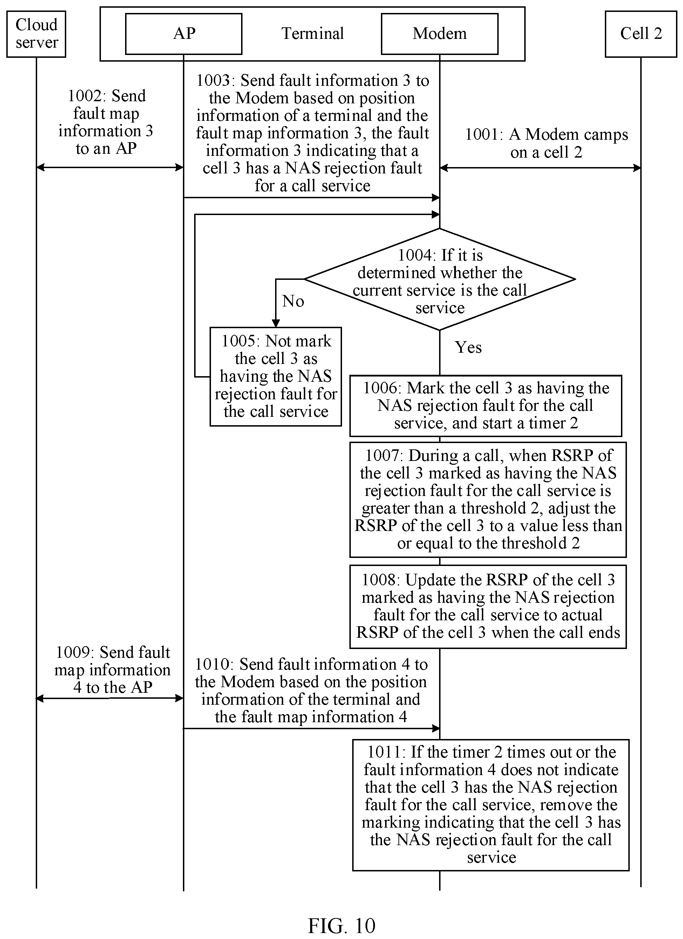

Referring to FIG. 10, FIG. 10 is a schematic flowchart of a cell fault processing method according to an embodiment of this application.

1001: A Modem in a terminal camps on a cell 2.

In this embodiment of this application, step 1001 is performed before step 1004. For example, step 1001 is performed before step 1002. In another example, step 1001 may be performed after step 1002 and before step 1003. In another example, step 1001 may be performed after step 1003 and before step 1004. Alternatively, step 1001 may be performed simultaneously with step 1002 or step 1003. This is not limited in this embodiment of this application.

That is, the Modem may first camp on the cell 2, receive fault information 3 sent by an AP, and then perform step 1004. Alternatively, the Modem may first receive the fault information 3 sent by the AP, camp on the cell 2, and then perform step 1004.

1002: A cloud server sends fault map information 3 to an AP in the terminal. Correspondingly, the AP may receive the fault map information 3.

1003: The AP sends fault information 3 to the Modem in the terminal based on position information of the terminal and the fault map information 3, the fault information 3 indicating that a cell 3 has a NAS rejection fault for a call service. Correspondingly, the Modem may receive the fault information 3.

For specific implementations of step 1002 and step 1003, refer to the descriptions corresponding to step 302 and step 303. Details are not described herein.

1004: The Modem determines, when camping on the cell 2, whether a current service is a call service. If the current service is not the call service, step 1005 is performed. If the current service is the call service, step 1006 is performed.

Generally, the terminal is in a connected state when executing the call service. However, in some special cases, the terminal is in an idle state when executing the call service. For example, an RLF occurs when the terminal executes the call service, causing the terminal to perform cell selection and enter the idle state. Therefore, step 1004 may be performed when the Modem camps on the cell 2 and is in the connected state or the idle state.

1005. The Modem does not mark the cell 3 as having the NAS rejection fault for the call service.

In this embodiment of this application, after performing step 1005, the Modem returns to step 1004.

1006. The Modem marks the cell 3 as having the NAS rejection fault for the call service, and starts a timer 2.

1007: During a call, when RSRP of the cell 3 marked as having the NAS rejection fault for the call service is greater than a threshold 2, adjust the RSRP of the cell 3 to a value less than or equal to the threshold 2.

1008: Update the RSRP of the cell 3 marked as having the NAS rejection fault for the call service to actual RSRP of the cell 3 when the call ends.

In this embodiment of this application, if the cell 3 indeed has the NAS rejection fault for the call service, the call may be interrupted due to camping of the Modem on the cell 3 during the call. When fault information 1 indicates that the cell 3 has the NAS rejection fault for the call service, there is a high possibility that the cell 3 indeed has the NAS rejection fault for the call service. Therefore, to prevent call interruption, when the current service is the call service and the fault information 1 indicates that the cell 3 has the NAS rejection fault for the call service, the Modem does not need to verify whether the cell 3 has the NAS rejection fault for the call service and may directly mark the cell 3 as having the NAS rejection fault for the call service. During the call, when the RSRP of the cell 3 marked as having the NAS rejection fault for the call service exceeds the threshold 2, the Modem may adjust the RSRP of the cell 3 to the threshold 2. In this way, the RSRP of the cell 3 is not reported when the cell 2 is camped on, the current service is the call service, and current actual RSRP of the cell 3 meets a measurement reporting condition. Alternatively, the cell 1 may not be selected/reselected for camping when the cell 2 is camped on, the current service is the call service, and the current actual RSRP of the cell 1 meets a cell selection/reselection condition for selecting/reselecting the cell 1 for camping. Then, interruption of a call caused by handover of the Modem to the cell 3 that has the NAS rejection fault for the call service for camping during the call can be prevented.

1009: A cloud server sends fault map information 4 to the AP in the terminal. Correspondingly, the AP may receive the fault map information 4.

1010: The AP sends fault information 4 to the Modem in the terminal based on the position information of the terminal and the fault map information 4, the fault information 4 indicating a faulty cell, a fault service of the cell, and a fault type of the cell. Correspondingly, the Modem may receive the fault information 4.

1011: If the timer 2 times out or the fault information 4 does not indicate that the cell 3 has the NAS rejection fault for the call service, the Modem removes the marking indicating that the cell 3 has the NAS rejection fault for the call service.

Specific implementation principles of step 1009 to step 1011 are the same as those of step 416 to step 418, and reference may be made to the descriptions corresponding to step 416 to step 418. Details are not described herein.

As can be seen, if the fault information 3 indicates that the cell 3 has the NAS rejection fault for the call service, by implementing the method described in FIG. 10, it is conducive to preventing an influence on user experience due to interruption of a call caused by the Modem's handover to/selection/reselection of the cell 3 for camping during execution of the call service.

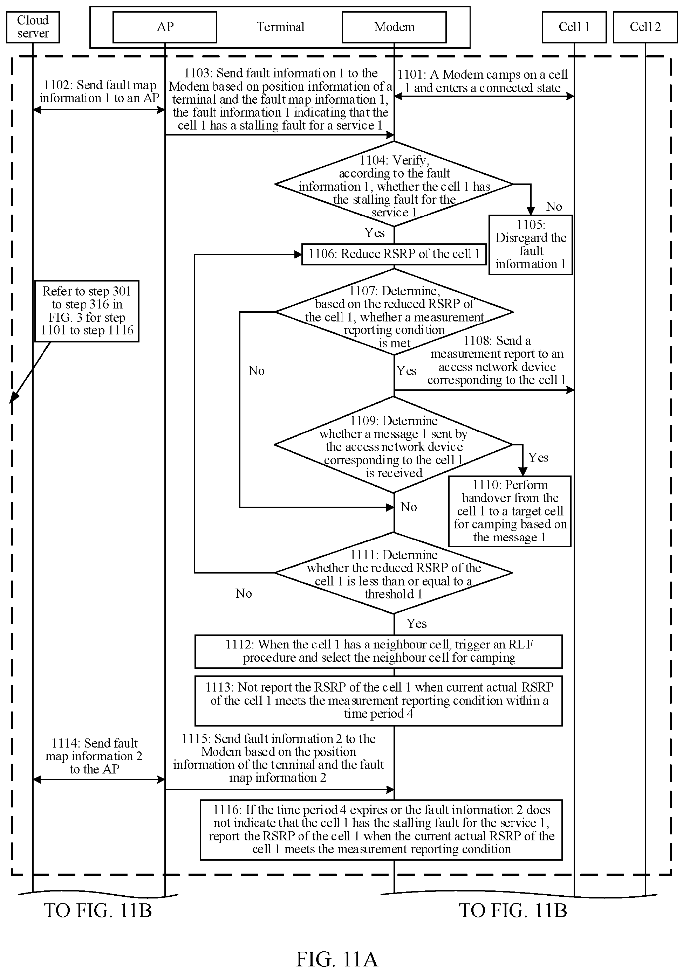

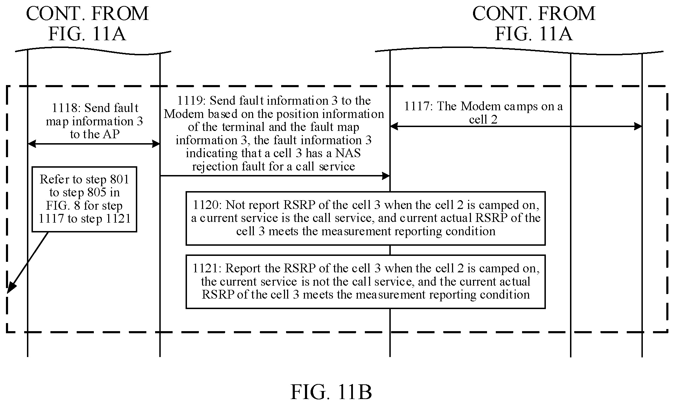

In a possible embodiment, the cell fault processing method shown in FIG. 3 may be combined with the cell fault processing method shown in FIG. 8. Refer to FIG. 11A and FIG. 11B, for example. For step 1101 to step 1116 in FIG. 11A and FIG. 11B, refer to the descriptions of step 301 to step 316 in FIG. 3. For step 1117 to step 1121, refer to the descriptions of step 801 to step 805 in FIG. 8.

Similarly, the cell fault processing method shown in FIG. 3 may be combined with the cell fault processing method shown in FIG. 9.

Similarly, the cell fault processing method shown in FIG. 3 may be combined with the cell fault processing method shown in FIG. 10.

Similarly, the cell fault processing method shown in FIG. 4 may be combined with the cell fault processing method shown in FIG. 8.

Similarly, the cell fault processing method shown in FIG. 4 may be combined with the cell fault processing method shown in FIG. 9.

Similarly, the cell fault processing method shown in FIG. 4 may be combined with the cell fault processing method shown in FIG. 10.

Similarly, the cell fault processing method shown in FIG. 7 may be combined with the cell fault processing method shown in FIG. 8.

Similarly, the cell fault processing method shown in FIG. 7 may be combined with the cell fault processing method shown in FIG. 9.

Similarly, the cell fault processing method shown in FIG. 7 may be combined with the cell fault processing method shown in FIG. 10.

**A hardware structure of a terminal 120 as referred to in an embodiment of this application is described below.**

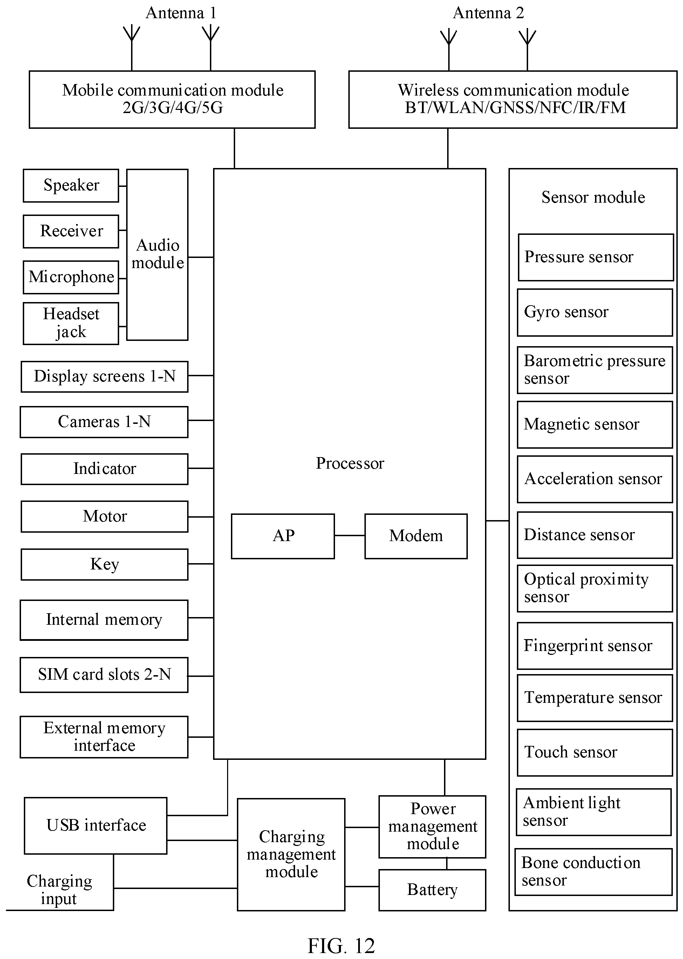

A hardware structure of the terminal, as shown in FIG. 12, may include: a processor, an external memory interface, an internal memory, a universal serial bus (Universal Serial Bus, USB) interface, a charging management module, a power management module, a battery, an antenna 1, an antenna 2, a mobile communication module, a wireless communication module, a sensor module, a key, a motor, an indicator, a camera, a display screen, an SIM card slot, and the like. An audio module may include a speaker, a receiver, a microphone, a headset jack, and the like. The sensor module may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment of this application does not constitute a specific limitation on the terminal. In some other embodiments, the terminal may include more or fewer components than those shown in the figure, some components may be combined, some components may be split, or a different component deployment may be used. The components shown in the figure may be implemented by using hardware, software, or a combination of software and hardware.

The processor may include one or more processing units. For example, the processor may include an application processor (Application Processor, AP), a modem processor (Modem, which may also be referred to as a baseband processor), a graphics processing unit (Graphics Processing Unit, GPU), an image signal processor (Image Signal Processor, ISP), a controller, a video codec, a digital signal processor (Digital Signal Processor, DSP), and/or a neural-network processing unit (Neural-network Processing Unit, NPU), and the like. Different processing units may be separate devices, or may be integrated to one or more processors. The processor is a nerve center and a command center of the terminal. The controller may generate an operation control signal according to instruction operation code and a timing signal, to complete control of fetching and executing instructions.

A wireless communication function of the terminal may be implemented by using the antenna 1, the antenna 2, the mobile communication module, the wireless communication module, the modem, and the like. In some embodiments, the antenna 1 and the mobile communication module of the terminal are coupled to each other, and the antenna 2 is coupled to the wireless communication module, so that the terminal can communicate with a network-side device and another terminal by using a wireless communication technology.

In addition, an operating system runs on the foregoing components, for example, an iOS operating system developed by Apple, an Android open-source operating system developed by Google, a Windows operating system developed by Microsoft, or the like.

The operating system of the terminal may adopt a layered architecture, an event-driven architecture, a microkernel architecture, a microservice architecture, or a cloud architecture. In this embodiment of this application, an Android system with a layered architecture is used as an example to illustrate a software and hardware structure of the terminal. It should be noted that, although the embodiments of this application are described by using the Android system as an example, a basic principle thereof is also applicable to a terminal that is based on an operating system such as iOS or Windows.

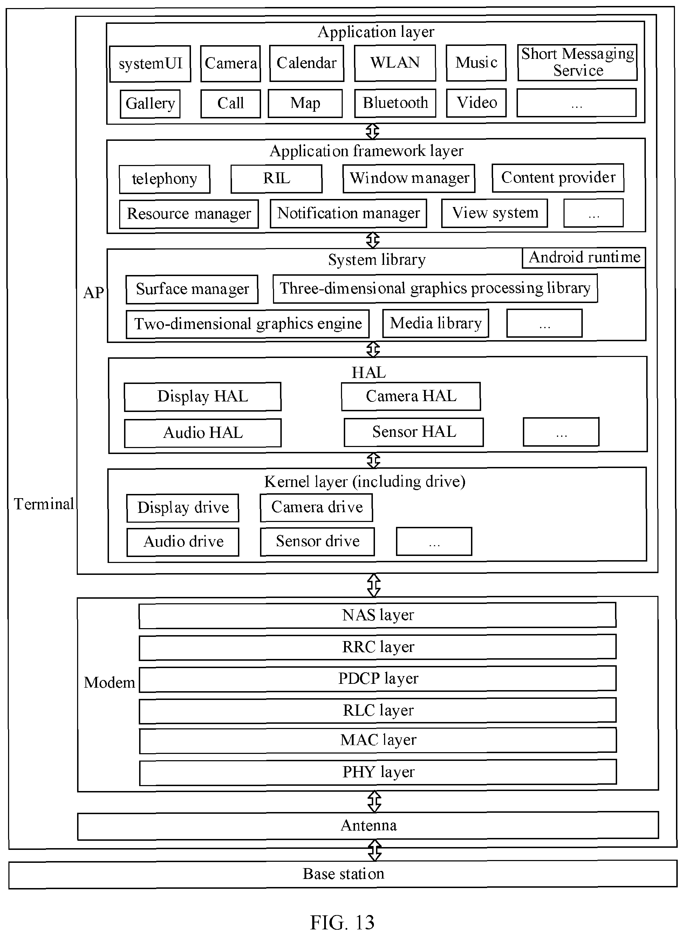

FIG. 13 is a block diagram of a software structure of a terminal. The software structure adopts a layered architecture. The layered architecture divides software divided into a plurality of layers, and each layer has a clear role and task. The layers communicate with each other by using a software interface. Taking an Android system as an example, where the Android system runs on an AP, in some embodiments, the Android system is divided into five layers that are respectively an application layer, an application framework layer (Framework), an Android runtime and system library layer, a hardware abstraction layer (HAL), and a system kernel layer (Kernel) from top to bottom.

The application layer may include a series of application packages. The application packages may include APPs such as Camera, Gallery, Calendar, Call, Map, WLAN, Bluetooth, Music, Video, and Short Messaging Service. The application layer may further include a systemUI (system UI). The systemUI is configured to display an interface of the terminal, for example, display a signal icon corresponding to a SIM card, or display a call interface. The application framework layer provides an application programming interface (application programming interface, API) and a programming framework for applications in the application layer. The application framework layer includes some predefined functions. For example, the application framework layer may include a window manager, a content provider, a view system, a phone manager, a resource manager, a notification manager, and the like. The phone manager is configured to provide a call function of the terminal, such as management of call states (including answering and hanging up). The phone manager is represented by telephony in FIG. 13. The application framework layer may further include an RIL (Radio Interface Layer). The modem (Modem) may exchange information with the telephony by using the RIL.

The Modem may include a NAS (Non-Access Stratum) layer, an RRC (radio resource control) layer, a packet data convergence protocol (Packet Data Convergence Protocol, PDCP) layer, a radio link control (Radio Link Control, RLC) layer, a medium access control layer (Medium Access Control Layer, MAC) layer, and a physical (Physical, PHY) layer. The layers may be software modules. The Modem may interact with a base station by using an antenna.

After the Modem acquires the fault information 1, the RRC layer performs a data processing operation of the Modem in the foregoing method embodiment. In the foregoing method embodiment, when the Modem sends data, the data may be transmitted in order of the RRC layer > the PDCP layer > the RCL layer > the MAC layer > the PHY layer, and is sent by the PHY layer to another device. In the foregoing method embodiment, when the Modem receives data from another device, the data may be transmitted to the RRC layer in order of the PHY layer > the MAC layer > the RCL layer > the PDCP layer > the RRC layer, and then the RRC layer performs data processing.

In addition, some embodiments of this application provide a terminal. The terminal includes: one or more processors and a memory. The memory is configured to store computer program code. The computer program code includes computer instructions. When the one or more processors execute the computer instructions, the terminal is caused to perform the foregoing paging message processing method.

Some embodiments of this application provide a chip system, applied to a terminal. The chip system includes at least one processor and an interface. The interface is configured to receive an instruction and transmit the instruction to the at least one processor. The at least one processor executes the instruction to cause the terminal to perform the foregoing paging message processing method. The chip system may be a Modem or a System on Chip (Soc) including a Modem, and the foregoing method may be implemented by one Modem.

An embodiment of this application further provides a computer-readable storage medium. The computer-readable storage medium has instructions stored therein. When the instructions run on a processor, a method flow of the above method embodiment is implemented.

An embodiment of this application further provides a computer program product. When the computer program product runs on a processor, a method flow of the above method embodiment is implemented.

It should be noted that, for ease of description, the foregoing method embodiments are stated as a combination of a series of actions. However, a person skilled in the art should know that this application is not limited by the described action sequence, because according to this application, some steps may be performed in another sequence or simultaneously. In addition, a person skilled in the art should also know that all embodiments described in the specification are preferred embodiments, and the related actions and modules are not necessarily mandatory to this invention.

The descriptions of the embodiments provided in this application may refer to each other, and the descriptions of the embodiments have their respective focuses. For a part that is not described in detail in an embodiment, reference may be made to related descriptions in other embodiments. For convenience and brevity of description, for example, for the apparatus, the function of the device, and the performed operation that are provided in the embodiments of this application, refer to related descriptions of the method embodiments of this application. The method embodiments and the apparatus embodiments may also be referred to, combined, or quoted with each other.

Finally, it should be noted that, the foregoing embodiments are merely used for describing the technical solutions of this application, but are not intended to limit this application. Although this application is described in detail with reference to the above embodiments, a person of ordinary skill in the art should understand that modifications may still be made to the technical solutions described in the foregoing embodiments, or equivalent replacements may be made to some or all of the technical features. However, the modifications or replacements do not cause the essence of the corresponding technical solutions to depart from the scope of the technical solutions of embodiments of this application.

## Claims

1. A cell fault processing method, wherein the method comprises:
acquiring first fault information, the first fault information indicating that a first cell has a stalling fault for a first service, and the first service being a data service or a call service;
verifying, according to the first fault information, whether the first cell has the stalling fault for the first service in the case of camping on the first cell and being in a connected state; and
sending a first measurement report to an access network device corresponding to the first cell after it is verified that the first cell has the stalling fault for the first service, the first measurement report carrying a first signal measurement result of the first cell, and the first signal measurement result being less than a current actual signal measurement result of the first cell.

2. The method according to claim 1, wherein the method further comprises:
after the first measurement report is sent, if a first message sent by the access network device corresponding to the first cell is received within a first time period, the first message carrying information of a target cell, performing, based on the first message, handover from the first cell to the target cell for camping, the first message indicating the handover from the first cell to the target cell.

3. The method according to claim 1 or 2, wherein the verifying, according to the first fault information, whether the first cell has the stalling fault for the first service comprises:
verifying, multiple times within a second time period according to the first fault information, whether the first cell has the stalling fault for the first service; and
the sending a first measurement report to an access network device corresponding to the first cell after it is verified that the first cell has the stalling fault for the first service comprises:
sending the first measurement report to the access network device corresponding to the first cell after it is verified for a preset consecutive verification count that the first cell has the stalling fault for the first service.

4. The method according to claim 2, wherein after the first measurement report is sent, when the first message sent by the access network device corresponding to the first cell is not received within the first time period, the method further comprises:
sending a second measurement report to the access network device corresponding to the first cell when the first signal measurement result of the first cell is greater than a first threshold, the second measurement report carrying a second signal measurement result of the first cell, the second signal measurement result being less than the current actual signal measurement result of the first cell, and the second signal measurement result being less than the first signal measurement result; and
after the second measurement report is sent, if the first message sent by the access network device corresponding to the first cell is received within a third time period, performing, based on the first message, handover from the first cell to the target cell for camping.

5. The method according to claim 2 or 4, wherein after the first measurement report is sent, when the first message sent by the access network device corresponding to the first cell is not received within the first time period, the method further comprises:
when the first signal measurement result of the first cell is less than or equal to the first threshold and the first cell has a neighbour cell, triggering a radio link failure RLF procedure, and selecting the neighbour cell for camping; and when the neighbour cell is selected for camping, a signal measurement result of the neighbour cell being less than the current actual signal measurement result of the first cell.

6. The method according to claim 4, wherein after the second measurement report is sent, when the first message sent by the access network device corresponding to the first cell is not received within the third time period, the method further comprises:
when the second signal measurement result of the first cell is less than or equal to the first threshold and the first cell has a neighbour cell, triggering a radio link failure RLF procedure, and selecting the neighbour cell for camping; and when the neighbour cell is selected for camping, a signal measurement result of the neighbour cell being less than the current actual signal measurement result of the first cell.

7. The method according to any one of claims 1 to 6, wherein the method further comprises:
disregarding the first fault information or not reducing a signal measurement result of the first cell if it is verified that the first cell does not have the stalling fault for the first service.

8. The method according to any one of claims 1 to 7, wherein when the first message is received, the method further comprises:
not reporting the signal measurement result of the first cell when the current actual signal measurement result of the first cell meets a measurement reporting condition.

9. The method according to claim 5, wherein when the first signal measurement result of the first cell is less than or equal to the first threshold, the method further comprises:
not reporting the signal measurement result of the first cell if the current actual signal measurement result of the first cell meets a measurement reporting condition.

10. The method according to claim 8 or 9, wherein the not reporting the signal measurement result of the first cell when the current actual signal measurement result of the first cell meets a measurement reporting condition comprises:
not reporting the signal measurement result of the first cell when the current actual signal measurement result of the first cell meets the measurement reporting condition within a fourth time period; and
the method further comprises:
reporting the signal measurement result of the first cell when the current actual signal measurement result of the first cell meets the measurement reporting condition if the fourth time period expires.

11. The method according to any one of claims 8 to 10, wherein the method further comprises:
acquiring second fault information, the second fault information being used for indicating a faulty cell, a fault type of the cell, and a fault service of the cell; and
reporting the signal measurement result of the first cell when the current actual signal measurement result of the first cell meets the measurement reporting condition if the second fault information does not indicate that the first cell has the stalling fault for the first service.

12. The method according to any one of claims 1 to 6 and 8 to 11, wherein the method further comprises:
marking the first cell as having the stalling fault for the first service after it is verified that the first cell has the stalling fault for the first service; and
reducing the signal measurement result of the first cell to a value less than or equal to a second threshold when the first message is received and when the signal measurement result of the first cell marked as having the stalling fault for the first service is greater than the second threshold.

13. The method according to claim 12, wherein the marking the first cell as having the stalling fault for the first service comprises:
marking the first cell as having the stalling fault for the first service, and starting a first timer; and
the method further comprises:
removing the marking indicating that the first cell has the stalling fault for the first service if the first timer times out.

14. The method according to claim 12 or 13, wherein the method further comprises:
acquiring second fault information, the second fault information being used for indicating a faulty cell, a fault type of the cell, and a fault service of the cell; and
removing the marking indicating that the first cell has the stalling fault for the first service after the second fault information does not indicate that the first cell has the stalling fault for the first service.

15. The method according to any one of claims 1 to 14, wherein the method further comprises:
acquiring third fault information when the second cell is camped on, the third fault information indicating that a third cell has a NAS rejection fault for the call service;
not reporting a signal measurement result of the third cell when the second cell is camped on, a current service is the call service, and a current actual signal measurement result of the third cell meets the measurement reporting condition; and
reporting the signal measurement result of the third cell when the second cell is camped on, the current service is not the call service, and a current actual signal measurement result of the second cell meets the measurement reporting condition.

16. The method according to any one of claims 1 to 14, wherein the method further comprises:
acquiring third fault information when the second cell is camped on, the third fault information indicating that a third cell has a NAS rejection fault for the call service;
reducing a signal measurement result of the third cell to a value less than or equal to a third threshold when the second cell is camped on, a current service is the call service, and a signal measurement result of the third cell is greater than the third threshold; and
not adjusting the signal measurement result of the third cell when the second cell is camped on, the current service is not the call service, and the signal measurement result of the third cell is greater than the third threshold.

17. A cell fault processing method, wherein the method comprises:
acquiring third fault information when a second cell is camped on, the third fault information indicating that a third cell has a NAS rejection fault for a call service;
not reporting a signal measurement result of the third cell when the second cell is camped on, a current service is the call service, and a current actual signal measurement result of the third cell meets a measurement reporting condition; and
reporting the signal measurement result of the third cell when the second cell is camped on, the current service is not the call service, and a current actual signal measurement result of the second cell meets the measurement reporting condition.

18. A cell fault processing method, wherein the method comprises:
acquiring third fault information when a second cell is camped on, the third fault information indicating that a third cell has a NAS rejection fault for a call service;
reducing a signal measurement result of the third cell to a value less than or equal to a third threshold when the second cell is camped on, a current service is the call service, and a signal measurement result of the third cell is greater than the third threshold; and
not adjusting the signal measurement result of the third cell when the second cell is camped on, the current service is not the call service, and the signal measurement result of the third cell is greater than the third threshold.

19. A cell fault processing method, wherein the method comprises:
acquiring first fault information, the first fault information indicating that a first cell has a stalling fault for a first service, and the first service being a data service or a call service;
verifying, according to the first fault information, whether the first cell has the stalling fault for the first service in the case of camping on the first cell and being in a connected state; and
disregarding the first fault information or not reducing a signal measurement result of the first cell if it is verified that the first cell does not have the stalling fault for the first service.

20. The method according to claim 19, wherein
the verifying, according to the first fault information, whether the first cell has the stalling fault for the first service comprises:
verifying, multiple times within a second time period according to the first fault information, whether the first cell has the stalling fault for the first service; and
the disregarding the first fault information or not reducing a signal measurement result of the first cell if it is verified that the first cell does not have the stalling fault for the first service comprises:
disregarding the first fault information or not reducing the signal measurement result of the first cell if it is not verified for a preset consecutive count that the first cell has the stalling fault for the first service when the second time period expires.

21. The method according to claim 19 or 20, wherein the method further comprises:
acquiring third fault information when the second cell is camped on, the third fault information indicating that a third cell has a NAS rejection fault for the call service;
not reporting a signal measurement result of the third cell when the second cell is camped on, a current service is the call service, and an actual signal measurement result of the third cell meets a measurement reporting condition; and
reporting the signal measurement result of the third cell when the second cell is camped on, the current service is not the call service, and an actual signal measurement result of the second cell meets the measurement reporting condition.

22. The method according to claim 19 or 20, wherein the method further comprises:
acquiring third fault information when the second cell is camped on, the third fault information indicating that a third cell has a NAS rejection fault for the call service;
reducing a signal measurement result of the third cell to a value less than or equal to a third threshold when the second cell is camped on, a current service is the call service, and a signal measurement result of the third cell is greater than the third threshold; and
not adjusting the signal measurement result of the third cell when the second cell is camped on, the current service is not the call service, and the signal measurement result of the third cell is greater than the third threshold.

23. A communication apparatus, comprising a processor, a memory, an input interface, and an output interface, the input interface being configured to receive information from another communication apparatus other than the communication apparatus, the output interface being configured to output information to the another communication apparatus other than the communication apparatus, and the processor invoking a computer program stored in the memory to cause the communication apparatus to perform the method according to any one of claims 1 to 22.

24. A chip system, applied to a terminal, wherein the chip system comprises at least one processor and an interface, the interface being configured to receive an instruction and transmit the instruction to the at least one processor; and the at least one processor executing the computer program to cause the terminal to perform the method according to any one of claims 1 to 22.
